# EUROPÄISCHE PATENTSCHRIFT

(11) **EP 2 356 044 B1**
(45) Veröffentlichungstag und Bekanntmachung des Hinweises auf die Patenterteilung: **31.07.2013**
(21) Anmeldenummer: 09767984.9
(22) Anmeldetag: 08.12.2009
(51) Int. Cl.: B65G 1/02, A47B 47/03

(54) **LAGERSYSTEM MIT RASTBAREN WANDPANEELEN, BAUKASTEN MIT SOLCHEN WANDPANEELEN SOWIE VERFAHREN ZUR MONTAGE DES SYSTEMS**
STORAGE SYSTEM HAVING LATCHABLE WALL PANELS, KIT HAVING SUCH PANELS, AND METHOD FOR ASSEMBLYING THE SYSTEM
SYSTÈME DE STOCKAGE AVEC PANNEAUX ENCLIQUETABLES, KIT DE CONSTRUCTION ET PROCÉDÉ DE MONTAGE DU SYSTEME

(30) Priorität: 08.12.2008 DE 202008016153 U; 29.10.2009 DE 102009051195
(43) Veröffentlichungstag der Anmeldung: 17.08.2011
(73) Patentinhaber: Kardex Production Deutschland GmbH, 86476 Neuburg/Kammel (DE)
(72) Erfinder: PRESCHKE, Harald, 89269 Vöhringen (DE)
(74) Vertreter: Grünecker, Kinkeldey, Stockmair & Schwanhäusser
(86) Internationale Anmeldenummer: PCT/EP2009/008761
(87) Internationale Veröffentlichungsnummer: WO 2010/075938

(56) Entgegenhaltungen:
- EP-A1- 0 262 090
- DE-U1- 20 304 872
- GB-A- 2 032 037
- US-A1- 2002 153 338

## Beschreibung

Die Erfindung betrifft ein automatisches Lagersystem mit einem Lagervolumen, das von einer aus wenigstens einem Wandpaneel gebildeten Verkleidung wenigstens abschnittsweise umgeben ist, wobei das Wandpaneel an einer Tragstruktur befestigt und mit der Tragstruktur verrastet ist. Des Weiteren betrifft die Erfindung einen Baukasten für automatische Lagersysteme, sowie ein Verfahren zur Montage eines Lagersystems aus diesem Baukasten, bei dem wenigstens ein Wandpaneel auf wenigstens eine Tragstütze im Wesentlichen quer zu einer Längsrichtung der Tragstütze aufgesetzt wird, wobei während des Aufsetzens eines Wandpaneels wenigstens ein Halteabschnitt der Tragstütze in wenigstens einem Befestigungsabschnitt des Wandpaneels selbsttätig formschlüssig eingreift.

Automatische Lagersysteme der oben genannten Art sind beispielsweise als Umlaufregale oder Paternoster- oder Lagerlift-Systeme zur automatischen Ein- und Auslagerung von Lagergut bekannt. Die DE 203 04 872 U1 offenbart ein solches Lagersystem gemäß dem Oberbegriff des Anspruchs 1. Als Teile von solchen automatischen Lagersystemen umschließen Wandpaneele ein Lagervolumen, um dieses gegen äußere Einflüsse schützen und ein Herausfallen von Lagergut aus dem Lagersystem zu verhindern. Umlaufregale sind dynamische Lagereinrichtungen mit bis zu 15 und mehr Metern Höhe, die Traglasten bis in den Tonnenbereich aufnehmen können. Um eine ausreichende Sicherheit für den Bediener zu gewährleisten, müssen die Einrichtungen hohen Sicherheitsanforderungen gerecht werden. Hierzu gehört beispielsweise auch, dass Lasten, die beim Umlaufen der Lagergutträger eine teilweise erhebliche Zentrifugalbeschleunigung erfahren, gegen das unbeabsichtigte Herausfallen aus dem Umlaufregal gesichert werden. Diese Sicherung erfolgt unter anderem durch eine Verkleidung der Umlaufregale mit Blechen oder dergleichen. Diese Bleche und ihre Befestigung müssen dabei darauf ausgelegt werden, dem gelagerten Gut standzuhalten, wenn dieses auf die Verkleidung auftrifft.

Üblicherweise wird eine Vielzahl von Tafeln bzw. Wandpaneelen für den Aufbau eines Lagersystems an einer vorzugsweise von Pfosten bzw. Tragstützen gebildeten Tragstruktur befestigt, welche die Wandpaneele für die Bildung eines geschlossenen Gehäuses zusammenhält. Um auch größere Kräfte aufnehmen zu können, die durch herabfallendes Lagergut auf die Wandpaneele einwirken können, werden die Wandpaneele mit stabilen Befestigungselementen, beispielsweise Schrauben, an der Tragstruktur befestigt oder an die Tragstruktur geschweißt. Daraus resultiert eine aufwendige und kostenintensive Montage und Demontage.

Um die Montage der Blechverkleidung zu vereinfachen, schlägt die EP 0 114 671 vor, die Blechverkleidung eines Umlaufregals schraubenlos zu befestigen. Hierzu werden an den Pfosten des Rahmengerüstes eines Schrankes Bleche befestigt, die herausgedrückte Stege aufweisen. In die durch die Stege begrenzten Öffnungen werden S-förmig gebogene Federspangen mit einem Schenkel eingesetzt, in deren anderen Schenkel ein Verkleidungsblech eingehängt ist. Nachteilig am vorgeschlagenen System ist, dass dieses ein zusätzliches Element in Form einer Federspange zum Verbinden von Blechverkleidung und Pfosten benötigt. Ebenso werden die Aufbauzeiten sowie die Gesamtkosten nur minimal reduziert und die Widerstandskraft der Verkleidung nicht wesentlich erhöht.

Der vorliegenden Erfindung liegt folglich die Aufgabe zugrunde, ein automatisches Lagersystem zu schaffen, das einfach und kostengünstig montierbar und demontierbar ist.

Diese Aufgabe wird erfindungsgemäß für ein automatisches Lagersystem der eingangs genannten Art dadurch gelöst, dass zwei benachbarte Wandpaneele zur Aufnahme des Halteelementes eine schlitzförmige Aufnahme bilden, in die das Halteelement eingeschoben ist. Die Seitenbereiche können Haltefortsätze aufweisen, die flächig geformt sind und aufeinander zu verlaufen. Die Haltefortsätze können eine Nut zur verschieblichen Aufnahme des Halteelementes bilden. Indem das Halteelement in einem von zwei benachbarten Seitenbereichen gebildeten Spalt verschiebbar aufgenommen ist, kann die Position des Halteelementes durch ein Verschieben innerhalb des Spaltes eingestellt werden.

Das Verrasten der Wandpaneele mit der Tragstruktur führt zu einer deutlichen Vereinfachung des Montagevorgangs, wobei die Montage der Wandpaneele vorzugsweise ohne Werkzeug erfolgt. Vorzugsweise wird ein Wandpaneel zur Montage von außen in die Verrastung gedrückt und ist damit selbsttätig an der Tragstruktur gehalten. Zur Demontage des Wandpaneels braucht nur der mit der Tragstruktur verrastete Abschnitt des Wandpaneels gegenüber der Tragstruktur ausgelenkt zu werden. Für einen erfindungsgemäßen Baukasten wird die oben genannte Aufgabe gelöst, indem der Baukasten wenigstens eine Tragstütze zum Aufbau einer ein automatisches Lagervolumen umgebenden Tragstruktur eines Lagersystems mit wenigstens einem Halteabschnitt zur Befestigung von Wandpaneelen, der als Rastelement mit wenigstens einer in Richtung des Lagervolumens weisenden Haltefläche ausgestaltet ist und/oder wenigstens ein mit der Tragstütze verrastbares Wandpaneel, das an gegenüberliegenden Seiten eines eine nach außen weisende Wandaußenfläche bildenden Außenwandabschnittes mit zwei sich quer zum Außenwandabschnitt erstreckenden Seitenbereichen mit jeweils wenigstens einem in die Seitenbereiche integrierten und als Rastelement mit wenigstens einer nach außen weisenden Haltefläche ausgestalteten Befestigungsabschnitt, umfasst. Der das Wandpaneel aufweisende Baukasten ist bevorzugt ohne Hilfsmittel allein durch Verrasten seiner Elemente montierbar.

Die erfindungsgemäße Lösung kann mit den folgenden weiteren, jeweils für sich vorteilhaften Ausgestaltungsformen beliebig kombiniert und weiter verbessert werden:
Gemäß einer ersten vorteilhaften Ausgestaltung kann zumindest ein Wandpaneel an gegenüberliegenden Seiten eines eine nach außen weisende Wandaußenfläche bildenden Außenwandabschnittes mit zwei sich quer zum Außenwandabschnitt erstreckenden Seitenbereichen mit jeweils wenigstens einem in die Seitenbereiche integrierten und als Rastelement mit wenigstens einer nach außen weisenden Haltefläche ausgestalteten Befestigungsabschnitt versehen sein.

Die Ausgestaltung des Befestigungsabschnitts als Rastelement ermöglicht ein einfaches Verrasten des Wandpaneels im Zuge der Montage, ohne dass zusätzliche Befestigungselemente benötigt werden. Vorzugsweise wird zur Montage das Wandpaneel von außen gegen die Tragstruktur gedrückt. Das Wandpaneel kann selbsttätig einrastend ausgebildet sein, so dass die Montage ohne weitere Hilfsmittel erfolgen kann.

Die Verrastung eines Wandpaneels kann durch eine Auslenkung des Befestigungsabschnittes gegenüber der Tragstruktur lösbar ausgestaltet sein. Somit ist die Demontage des Lagersystems deutlich vereinfacht. Die Auslenkung der Befestigungsabschnitte kann ohne Werkzeuge oder mit Hilfe einfach ausgestalteter Werkzeuge erfolgen, beispielsweise durch einen Hebel.

Der Abschnitt der Tragstruktur oder der Tragstütze, auf dem die Halteflächen des Wandpaneels aufliegen, ist in einer vorteilhaften Ausgestaltung insbesondere zwischen den Seitenbereichen angeordnet. Der Seitenbereich oder die Halteflächen des Wandpaneels können somit im montierten Zustand der Wandpaneele einen Abschnitt einer Tragstruktur oder einer Tragstütze des Lagersystems hintergreifen. Die Halteflächen sind des Weiteren vorzugsweise im Wesentlichen starr mit dem Außenwandabschnitt verbunden, beispielsweise als abgekantete Bereiche. Bei dieser Ausgestaltung verstärkt eine Verformung des Außenwandabschnittes aufgrund einer Belastung des Wandpaneels von Innen die Befestigung der Wandpaneele an der Tragstruktur. Dieser Effekt erhöht maßgeblich die Sicherheit des Lagersystems: Trifft beispielsweise verrutschendes oder herabfallendes Lagergut von Innen oder aus dem Lagervolumen auf den Außenwandabschnitt und wird der Außenwandabschnitt in Folge dessen nach außen gebogen, werden die im Wesentlichen starr mit dem Außenwandabschnitt verbundene Halteflächen zusammen mit den angrenzenden Bereichen des Außenwandabschnittes gegenüber der Tragstruktur des Lagersystems derart belastet, dass die Halteflächen sich gegen eine Ablösung von der Tragstütze stemmen.

Zugleich kann die Biegung des Außenwandabschnittes zu einer Verkürzung des Abstands zwischen den sich gegenüberliegenden Seitenbereichen führen, wodurch die Seitenbereiche zusätzlich auf die Tragstruktur gedrückt werden.

Gemäß einer weiteren vorteilhaften Ausgestaltung des Wandpaneels können sich die Halteflächen eines Seitenbereiches in einer parallel zum Außenwandabschnitt verlaufenden vertikalen Richtung über insgesamt wenigstens ein Drittel der Höhe des Außenwandabschnittes erstrecken. Die Wandpaneele können eine Vielzahl von Befestigungsabschnitten aufweisen, die vorzugsweise über den Seitenbereich gleichmäßig verteilt sind. Somit können auch bei sehr leicht gestalteten, weniger biegesteifen Wandpaneelen hohe Belastungen durch die Befestigungsabschnitte aufgenommen werden. Indem eine Vielzahl von Befestigungsabschnitten einen Seitenbereich mit der Tragstruktur des Lagersystems verbindet, wird das Wandpaneel durch die angeschlossene Tragstruktur zusätzlich versteift. Die gegenüber herkömmlichen Wandpaneelen erhöhte Zahl von Befestigungspunkten erhöht im Gegensatz zu beispielsweise Schweiß- oder Schraubverbindungen nicht den Montageaufwand, da die Rastelemente eines Wandpaneels bei dessen Montage selbsttätig und nahezu gleichzeitig einrasten.

Ein Seitenbereich kann vorzugsweise mindestens etwa fünf, mindestens etwa zehn oder mehr als zehn Befestigungsabschnitte aufweisen. Die Befestigungsabschnitte sind vorzugsweise parallel zum Außenwandabschnitt hintereinander vorzugsweise fluchtend angeordnet. Somit kann ohne eine Vergrößerung einzelner Befestigungsabschnitte die Auflagefläche der Wandpaneele an den Befestigungsabschnitten vergrößert und die Festigkeit der Verkleidung erhöht werden.

Um die Tragfähigkeit der Befestigung eines Wandpaneels weiter zu erhöhen, kann dieses nicht nur an zwei sich gegenüberliegenden Seiten, sondern in weiteren vorteilhaften Ausgestaltungen auch an drei oder vier Seiten des Außenwandabschnittes mit Seitenbereichen versehen sein, in die Befestigungsabschnitte integriert sind.

Des Weiteren kann das Wandpaneel an sich gegenüberliegenden Seiten des Außenwandabschnittes mit Versteifungen ausgestattet sein, die insbesondere die Biegesteifigkeit eines Wandpaneels erhöhen und somit zwei sich gegenüberliegende, nicht über Seitenbereiche an der Tragstruktur befestigte Seiten des Außenwandabschnittes versteifen. Die Versteifungen können jeweils von einer oder zwei Abkantungen gebildet sein. Die Abkantungen können einen Profilkörper bilden.

In einer weiteren vorteilhaften Ausgestaltung kann zumindest ein Wandpaneel den Seitenbereichen in einer parallel zum Außenwandabschnitt verlaufenden Richtung gegenüberliegende Stützflächen aufweisen, die mit den Seitenbereichen eine Ausnehmung zur Aufnahme jeweils einer Tragstütze bilden. Somit werden Belastungen des Außenwandabschnitts, insbesondere von Innen auf den Außenwandabschnitt wirkende Biegemomente, wenigstens teilweise über zusätzliche Stützflächen in die Tragstützen oder die Tragstruktur des Lagersystems eingeleitet und die Befestigungsabschnitte entlastet. Vorzugsweise ist das Wandpaneel mit sich bezüglich des Außenwandabschnitts gegenüberliegenden Versteifungen ausgestattet, welche die Stützflächen bilden.

Für eine einfache Herstellung der Wandpaneele kann der Befestigungsabschnitt von einer sich im Wesentlichen parallel zum Außenwandabschnitt erstreckenden Öffnung gebildet sein. Die Haltefläche kann von einer nach innen weisenden Fläche der Öffnung gebildet sein. Die Öffnung kann rechteckig geformt sein, wobei vorzugsweise eine der langen Seiten des Rechteckes die Haltefläche bildet. Das Wandpaneel kann aus Blech gefertigt und beispielsweise mit von gestanzten Öffnungen gebildeten Befestigungsabschnitten versehen sein. Alternativ kann das Wandpaneel aus Bahnmaterial hergestellt sein, das mit gestanzten Befestigungsabschnitten versehen ist. Des Weiteren kann das Wandpaneel aus Kunststoff gegossen die Befestigungsabschnitte in einem Fertigungsschritt während des Gießens des Wandpaneels erzeugt sein. Hierfür sind insbesondere schlagfeste, nicht spröde Kunststoffe, beispielsweise faserverstärkte Kunststoffe, geeignet.

Gemäß einer weiteren vorteilhaften Ausgestaltung des Wandpaneels können die Befestigungsabschnitte von beispielsweise quaderförmigen Fortsätzen gebildet sein, die sich parallel zum Außenwandabschnitt von den Seitenbereichen weg erstrecken. Die Haltefläche kann von einer Seitenfläche des Fortsatzes gebildet sein. Die als Fortsätze ausgestalteten Befestigungsabschnitte können sich zur Bildung von im Wesentlichen parallel zum Außenwandabschnitt verlaufenden Halteflächen in Richtung des Außenwandabschnittes oder von diesem weg erstrecken.

Die Seitenbereiche eines Wandpaneels können insbesondere in einer von der Außenwandfläche weg weisenden Richtung elastisch auslenkbar sein, um Rastelemente des Wandpaneels mit Rastelementen von beidseits des Wandpaneels angeordneten Tragstützen in Eingriff bringen zu können. Die Befestigungsabschnitte der Seitenabschnitte können beispielsweise von Öffnungen gebildet sein, die in von der Außenwandfläche weg weisende, als Fortsätze ausgestaltete Halteabschnitte der Tragstützen einrasten. Somit werden beim Aufsetzen eines Wandpaneels Halteabschnitte zweier parallel zueinander verlaufender Tragstützen zwischen zwei parallel zueinander verlaufenden Seitenbereichen aufgenommen, indem der Raum zwischen den Seitenabschnitten durch eine elastische Verformung der Seitenabschnitte vergrößert wird. Erst wenn die Halteabschnitte der Tragstützen und die Befestigungsabschnitte der Wandpaneele miteinander fluchten, federn die Seitenabschnitte der Wandpaneele in ihre ursprüngliche Position zurück.

Um das Einsetzen der Wandpaneele zu erleichtern, können diese freien Enden der Befestigungsabschnitte eine gegenüber dem übrigen Befestigungsabschnitt geneigte Auflauf- oder Montageschräge bilden.

Vorzugsweise umfasst die Tragstütze wenigstens einen Halteabschnitt, der als Rastelement mit wenigstens einer in Richtung des Lagervolumens weisenden Haltefläche ausgestaltet ist. Die Ausgestaltung als Rastelement ermöglicht eine einfache und schnelle Montage von Wandpaneelen, während eine in Richtung des Lagervolumens weisende Haltefläche durch herabfallende oder verlagerte Gegenstände im Lagersystem entstehende Kräfte auffängt.

Der wenigstens eine Halteabschnitt kann gemäß einer vorteilhaften Ausgestaltung der Tragstütze von einem in die Tragstütze integrierten Fortsatz gebildet sein, der sich parallel zur Haltefläche und im montierten Zustand des Lagersystems parallel zum Außenwandabschnitt von der Tragstütze weg erstreckt. Alternativ kann der Befestigungsabschnitt von einer sich im Wesentlichen parallel zur Haltefläche oder parallel zum Außenwandabschnitt erstreckenden Öffnung gebildet sein, wobei wenigstens eine Innenfläche der Öffnung die Haltefläche der Tragstütze bildet.

In einer weiteren vorteilhaften Ausgestaltung kann die Tragstütze parallel zueinander und in einer Längsrichtung der Tragstütze verlaufende Seitenbereiche aufweisen, an welchen die Halteabschnitte angeordnet sind. Ein Seitenbereich einer Tragstütze kann vorzugsweise fünf oder mehr Halteabschnitte aufweisen, um die Summe der Halteflächen zu vergrößern.

Die Tragstütze kann vorteilhaft als Profilkörper ausgestaltet sein, der zumindest in einem ersten Fertigungsschritt in einem Strangguss- und/oder Strangpressverfahren hergestellt sein kann. Die Tragstütze weist vorzugsweise einen im Wesentlichen C-förmigen Querschnitt auf, an dessen sich gegenüberliegenden Enden die Seitenbereiche und/oder Halteabschnitte zur Befestigung jeweils wenigstens eines Wandpaneels angeordnet sind.

Die Halteabschnitte an sich gegenüberliegenden Enden des C-, L- oder U-förmigen Querschnitts oder die Halteflächen dieser Halteabschnitte können parallel zueinander verlaufen, um an der Tragstütze befestigte Wandpaneele auf einer gemeinsamen Ebene anzuordnen. Auf diese Weise können an gegenüberliegenden Seiten der Tragstütze befestigte Wandpaneele eine ebene Wand bilden.

In einer weiteren vorteilhaften Ausgestaltung können die sich gegenüberliegenden Halteabschnitte an den Enden des C-förmigen Querschnitts zueinander abgewinkelt sein, um mit Wandpaneelen eine entsprechend gewinkelte Wand zu erzeugen. Vorzugsweise sind die Halteabschnitte in einem Winkel von etwa 90° zueinander angeordnet, so dass auch angeschlossene Wandpaneele einen Winkel von etwa 90° bilden. Die Tragstützen können somit als Eckpfosten einer Tragstruktur dienen, die mit lediglich an den Eckpfosten befestigten Wandpaneelen ein im Wesentlichen rechteckiges Gehäuse eines Lagersystems bilden.

Bezüglich des Baukastens für Lagersysteme wird die oben genannte Aufgabe gelöst, indem ein Halteelement vorgesehen ist, das zwischen Seitenbereiche zweier in einer horizontalen Richtung benachbarter Wandpaneele formschlüssig einsetzbar ausgestaltet ist und durch das die Seitenbereiche miteinander formschlüssig verbindbar sind, um montierte Wandpaneele an der Tragstütze nach ihrer Montage zu sichern. Die Seitenbereiche benachbarter Wandpaneele können gegeneinander sich über das Halteelement aneinander abstützen, um unbeabsichtigte, auf einen Seitenbereich wirkende Lösekräfte auf den benachbarten Seitenbereich zu übertragen und dadurch aufzufangen. Die durch ein Zusammenstecken montierbaren Wandpaneele und/oder Tragstützen führen zu einer deutlichen Vereinfachung der Montage des Lagersystems, die eine Verringerung des Montageaufwandes und der Montagekosten zur Folge hat.

Die Befestigungsabschnitte benachbarter Seitenbereiche können zueinander gewinkelt angeordnet sein oder in entgegengesetzte Richtungen weisen, so dass eine auf ein zwischen den Seitenbereichen angeordnetes Halteelement wirkende Kraft wenigstens einen Seitenbereich eines Wandpaneels auf den Befestigungsabschnitt der verbunden Tragstütze drückt. Somit wird eine von innen gegen ein Wandpaneele drückende Kraft über den Seitenbereich eines benachbarten Wandpaneels aufgefangen.

Für eine formschlüssige Verbindung mit einem Halteelement können die Seitenbereiche Haltefortsätze aufweisen, die in das Halteelement einführbar sind. Die Haltefortsätze können schräg zu den Außenwandabschnitten verlaufen, wobei sich Haltefortsätze zweier in einer horizontalen Richtung benachbarter Wandpaneele aufeinander zu erstrecken. Um die Haltefortsätze zweier benachbarter Wandpaneele in einen ebenen Schlitz des Halteelementes einführen zu können, kann zwischen dem die Befestigungsabschnitte umfassenden Bereichen des Seitenbereichs, die senkrecht zum Außenwandabschnitt verlaufen, und den Haltefortsätzen ein Winkel von etwa 135° vorgesehen sein.

Gemäß einer weiteren vorteilhaften Ausgestaltung des Baukastens kann das Halteelement in einer horizontalen Richtung, in der das Halteelement zwischen Wandpaneelen eingesetzt wird, ein kreuzförmiges Profil aufweisen. Zwischen in einer vertikalen und oder in einer horizontalen Richtung benachbarten Wandpaneelen kann zwischen den Seitenbereichen jeweils ein Spalt oder Schlitz verbleiben, wobei die zwischen vier aufeinandertreffenden Wandpaneelen verbleibenden Schlitze einen kreuzförmigen Schlitz bilden. Somit kann das Halteelement auch bei montierten Wandpaneelen zwischen vier aufeinandertreffenden Wandpaneelen in den verbleibenden kreuzförmigen Schlitz eingeführt werden. Das kreuzförmige Profil des Halteelementes kann an die Abmessungen des von vier aufeinandertreffenden Seitenbereichen gebildeten Kreuzschlitzes angepasst sein.

Das Halteelement kann Hinterschneidungen aufweisen, in die Seitenbereiche benachbarter Wandpaneele einführbar sind. Die Hinterschneidungen können als durchgängige schlitzförmige Aufnahmen ausgestaltet sein, deren Abmessungen an die Abmessungen der aufzunehmenden Seitenbereiche angepasst sind. Es können zwei sich gegenüberliegende schlitzförmige Aufnahmen an einem Halteelement vorgesehen sein.

Um neben dem Formschluss zwischen dem Halteelement und den aufgenommenen Seitenbereichen einen Kraftschluss zu erzeugen, der das Halteelement in einer bestimmten Position arretiert, kann das Halteelement wenigstens abschnittsweise elastisch auslenkbar ausgestaltet sein. Seitliche Begrenzungen der schlitzförmigen Aufnahmen des Halteelementes können von einem bogenförmigen, elastisch auslenkbaren Abschnitt des Halteelementes gebildet sein, der bei in das Halteelement aufgenommenen Seitenbereichen elastisch auf die Seitenbereiche drückt und somit einen Reibschluss zwischen den Seitenbereichen und dem Halteelement erzeugt.

Um die Stützwirkung des Halteelement gegenüber den Seitenbereichen zu verbessern, kann dieses in einer weiteren vorteilhaften Ausgestaltung als Nutenstein ausgestaltet sein, der in den Spalt zwischen Seitenbereichen angeordnet an wenigstens jeweils drei Seiten eines Seitenbereiches anliegt und somit die Seitenbereiche gegen eine quer zu dem von den Seitenbereichen gebildeten Schlitz auftretende Verformung versteift.

Für einen Schutz der Seitenbereiche der Wandpaneele gegen einen Zugriff von Außen kann das Halteelement mit einer Schutzabdeckung verrastbar sein, welche die Seitenabschnitte von wenigstens zwei benachbarten Wandpaneelen verdeckt. Das Halteelement kann einen Rastfortsatz umfassen, um eine Verrastung der Schutzabdeckung mit den Halteelementen zu ermöglichen. Somit ist auch die Schutzabdeckung ohne Werkzeuge montierbar.

Die mit dem Halteelement oder mit mehreren nebeneinander angeordneten Halteelementen verrastbare Schutzabdeckung kann insbesondere auf sich im Wesentlichen gegenüber angeordneten Flächen von benachbarten Seitenbereichen aufliegen, um ein Lösen der Rastverbindungen zwischen Seitenbereichen und Tragstützen zu verhindern.

Die Schutzabdeckung kann die Seitenbereiche benachbarter Wandpaneele nach außen abdecken, um ein unbeabsichtigtes Lösen der Seitenbereiche von einer darunterliegenden Tragstütze zu vermeiden. Des Weiteren kann die Schutzabdeckung vorteilhaft eine Außenfläche bilden, die mit Wandaußenflächen der Wandpaneele fluchtet. Somit entstehen keine Vorsprünge oder Vertiefungen in der Außenwand des Lagersystems, die ein Verhaken oder Hängenbleiben von Gegenständen oder Personen ermöglichen könnten.

Vorzugsweise umfasst die Schutzabdeckung wenigstens einen Stützabschnitt, der wenigstens abschnittsweise auf den Seitenbereichen zueinander benachbarter Wandpaneele aufliegt. Auf diese Weise blockiert die Schutzabdeckung benachbarte Seitenbereiche gegen ein unbeabsichtigtes Lösen.

Bei einem erfindungsgemäßen Verfahren wird die oben genannte Aufgabe gelöst, indem das Halteelement, das zur Sicherung der Befestigung des von zwei benachbarten Wandpaneelen dient, in einen von vier Wandpaneelen gebildeten Kreuzschlitz eingesetzt und anschließend in einer vertikalen Richtung verschoben wird. Somit kann das Halteelement wie das Wandpaneel ohne den Einsatz von Werkzeugen montiert werden und allein durch das Aufsetzen des Wandpaneels wird das Wandpaneel an der Tragstütze befestigt. Der Formschluss hält vorzugsweise allein ohne zusätzliche Befestigungsmittel das Wandpaneel an der Tragstruktur.

Um eine Verkleidung für Lagerlifte, Lagersysteme oder insbesondere für Umlaufregale zu schaffen, die neben einer erhöhten Widerstandskraft auch eine Versteifung des Regalaufbaus bewirkt und dabei besonders einfach und schnell montiert werden kann, kann die Verkleidung mehrere Tragstützen und zwischen den Tragstützen angeordnete Paneele, insbesondere Bleche umfassen. Die Pfosten bzw. Tragstützen können abgewinkelte Längsseiten mit einer Vielzahl von gleichmäßig beabstandeten Vorsprüngen und die den Tragstützen zugewandten Enden der Tafeln bzw. Wandpaneelen Abkantungen zum Umgreifen der Längsseiten aufweisen. Die Abkantungen können vorzugsweise Befestigungsabschnitte aufweisen, die mit den Vorsprüngen in Eingriff bringbar sind. An den Abkantungen kann Haltefortsatz, insbesondere im Winkel von 45° vorgesehen sein, die sich in Richtung der gegenüberliegenden Längsseite erstreckt. Die Abwinkelung kann einen Haltefortsatz bilden.

Die erfindungsgemäße Regalverkleidung eignet sich insbesondere für die Verwendung mit einem Umlaufregal. Daneben ist selbstverständlich auch die Verkleidung anderer Lager- oder Regalsysteme, wie beispielsweise von Regalliften möglich. Die Verkleidung weist mehrere Pfosten bzw. Tragstützen, in der Regel vier, bei zusammengesetzten Regalen oder Regalsystemen auch sechs oder mehr Pfosten bzw. Tragstützen auf und kann zudem über Zwischenpfosten zur Stabilisierung oder Überbrückung längerer Regalstrecken verfügen. Zudem sind zwischen den Pfosten bzw. Tragstützen angeordnete Tafeln bzw. Wandpaneele vorgesehen, über die eine Verblendung der Regalseiten vorgenommen wird. Während die Wandpaneele in den meisten Fällen aus Blechen gebildet werden, können jedoch in Abhängigkeit von den jeweiligen Sicherheitsanforderungen auch andere flächenhafte, beispielsweise aus Spezialkunststoffen gefertigte Materialen als Verkleidung verwendet werden. Die erfindungsgemäße Verkleidung ist dadurch gekennzeichnet, dass die Tragstützen (insbesondere C-, L- oder U-Profile) abgewinkelte Längsseiten mit einer Vielzahl von daran angeordneten, gleichmäßig beabstandeten Vorsprüngen aufweisen. Zudem verfügen die den Tragstützen zugewandten Enden der Wandpaneele über Abkantungen, die die Schenkel der Profile umgreifen. Die Abkantungen weisen dabei insbesondere einen Winkel von 90° zur Hauptfläche bzw. zum Außenwandabschnitt der Tafeln bzw. Wandpaneelen auf, so dass sich die Wandpaneelen bei umgriffenem Schenkel rechtwinklig von diesem weg erstrecken. Die Abkantungen weisen in ihren an der Längsseite des Schenkels anliegenden Flächen als Ausnehmungen ausgestaltete Befestigungsabschnitte auf, die mit den Vorsprüngen an den Längsseiten in Eingriff bringbar sind. Bei der Montage der Verkleidung werden die Wandpaneelen auf die im Regelfall bereits aufgestellten Tragstützen aufgesetzt und die Befestigungsabschnitte mit den Vorsprüngen verrastet bzw. nach Art einer Schnappverbindung mit diesen in Eingriff gebracht. Die Montage erfolgt hierbei ohne Werkzeugeinsatz und schraubenlos. Bei der Demontage kann nach Lösen der obersten bzw. einer ersten Rastverbindung, beispielsweise mit einem keilartigen Spezialwerkzeug, das gesamte Wandpaneel nach Art eines Reißverschlusses von der Verkleidung abgelöst werden, wodurch sich die Demontagezeiten signifikant verringern.

Als besonders vorteilhaft wird in diesem Zusammenhang angesehen, wenn die Tragstützen die Tragpfosten des Umlaufregals bilden. In diesem Fall kommen keine gesonderten Tragstützen zum Einsatz, sondern die Tragpfosten weisen bereits entsprechend abgewinkelte Längsseiten auf. Daneben ist auch eine Verbindung, beispielsweise eine Schraub- oder Schweißverbindung, zwischen Profilen und Tragpfosten denkbar. Selbstverständlich können aber auch einzelne, wie oben beschriebene Schenkel an den Tragpfosten befestigt werden, die von den Abkantungen umgriffen werden.

Diese Ausgestaltung der Verbindung zwischen Wandpaneelen und Tragstützen erweist sich gegenüber herkömmlichen Schraub- oder Nietverbindungen als besonders widerstandsfähig gegenüber Beaufschlagung durch umfallende Lasten. Hierbei kommt es, anders als bei herkömmlichen Schraub- oder Nietverbindungen nicht zu einem Ausreißen der Verbindungspunkte, sondern lediglich zu einer plastischen Beanspruchung der Wandpaneelen bzw. der Abkantungen. Dadurch wird die gesamte auftretende Kraft aufgenommen. An den Abkantungen sind zusätzlich Abwinkelungen, insbesondere im Winkel von 45° vorgesehen, die sich in Richtung der Längsseite des an der Tragstütze gegenüberliegenden Schenkels erstrecken und Haltefortsätze bilden. Die Abwinkelungen der die Schenkel umgreifenden. Abkantungen von an den Tragstützen angeordneten Paneelen können vorzugsweise Halterungen bilden. Durch diese Abwinkelungen wird zunächst erreicht, dass die Wandpaneelen problemlos auf der Tragstütze aufgesetzt werden können, ohne dabei zu verkanten. Während des Ansetzens der Wandpaneelen bewirken die Abwinklungen im Zusammenspiel mit der Tragstütze ein leichtes Aufbiegen der Abkantungen, so dass diese auf die Längsseiten und die daran angeordneten Vorsprünge aufgleiten. Hiernach federn die Abkantungen in ihre Ausgangspositionen zurück. Dabei kommen die Befestigungsabschnitte mit den Vorsprüngen in Eingriff und verrasten die Wandpaneelen mit den Tragstützen in besonders stabiler Weise. Die Abwinkelungen schließen zudem das Innere des jeweiligen Tragstützenprofls ab und bilden so einen Kantenabschluss nach Art einer Verblendung.

Werden Leitungen im Profil geführt, dient die Abwinkelung zugleich als Schutz gegen deren Beschädigung. In diesem Zusammenhang ist es auch günstig, wenn die Abwinkelung mit der formgleichen Abwinkelung der an der gleichen Tragstütze gegenüberliegend angeordneten Wandpaneele einen Spalt bildet. Dieser Spalt kann als Aufnahme für eine aufsteck- oder aufschraubbare Eckverblendung bzw. Schutzabdeckung verwendet werden. Es besteht jedoch auch die Möglichkeit den Spalt zur nachträglichen Verlegung von Leitungen, beispielsweise von Kabeln oder dergleichen im Innern des Tragstützenprofils zu nutzen.

Die Hauptflächen bzw. Außenwandabschnitte der Wandpaneele weisen zu den Tragstützen hin eine Beabstandung auf. Bei Beaufschlagung der Wandpaneele verbiegen sich diese vom Regalkörper weg. Aufgrund der Beabstandung werden die seitlich an den Wandpaneelen angelenkten Abkantungen gleichzeitig mit der Beaufschlagung zu den Schenkeln hin verbogen. Dabei werden die Befestigungsabschnitte an den Abkantungen weiter auf die Vorsprünge geschoben und die Verrastung gesichert.

Die vorgestellte Verkleidung erweist sich herkömmlichen Verkleidungen überlegen. Durch die Verkleidung können höhere Kräfte aufgenommen werden, ohne den Bediener des Regals durch herabfallende Verkleidungsbestandteile zu gefährden. Daneben wird die Montage der Verkleidung vereinfacht und Montagezeiten und -kosten verringert.

Um die Wandpaneelen des Regalsystems zu versteifen und um die Wandpaneelen beim Ansetzen an der Verkleidung zu führen, ist eine Abkantung bzw. Abknickung der Längsseiten der Wandpaneele zum Regalkörper hin vorgesehen. Diese ist dabei so ausgeschnitten, dass sie an der Außenseite eines Schenkels anliegt.

Gemäß einer weiteren vorteilhaften Ausgestaltung kann eine Eckverblendung bzw. Schutzabdeckung für Verkleidungen vorgesehen sein. Die E ckverblendung bzw. Schutzabdeckung eignet sich dabei insbesondere zur Verkleidung der Eckbereiche von wie oben beschriebenen Verkleidungen. Die Schutzabdeckung kann als Leiste mit vorspringenden Verbindungselementen ausgebildet sein. Diese können vorzugsweise Halterungen, die zwischen den Schenkeln eines als Profil ausgebildeten Pfostens bzw. einer Tragstütze einer Regalverkleidung angeordnet sind, hintergreifen. Hierdurch kann die Schutzabdeckung an der Tragstütze angebracht werden. Als Halterung kommen dabei sämtliche in oder an der Tragstütze angebrachte oder an der Tragstütze oder dem Tragpfosten eines Regals angeformte bzw. angesetzte Leisten oder Schienen in Frage. Als besonders vorteilhaft wird angesehen, wenn die Halterungen durch Abwinklungen an den die Schenkel umgreifenden Abkantungen von Tafeln bzw. Wandpaneelen gebildet sind, wie vorstehend beschrieben. Hierbei bilden beispielsweise die Abwinklungen von zwei an gegenüberliegenden Schenkeln der Tragstütze angeordneten Wandpaneelen einen Spalt aus, der als Aufnahme für die vorspringenden Verbindungselemente dient, z. B. von Spreiznieten. Der Steckverbinder kann vorzugsweise als Spreizniete ausgebildet sein.

Bevorzugt sind die Verbindungselemente bzw. Steckverbinder als Klips- oder Schnappverbinder ausgebildet. In dieser Ausführungsform kann die Schutzabdeckung mehrfach von der Verkleidung gelöst und wieder aufgesetzt werden, ohne die Verbindungselemente zu verschleißen. Die Schnappverbinder weisen dabei beispielsweise zwei parallele Schenkel auf, die aus einem im Vergleich zur Schutzabdeckung weicheren, elastisch verformbaren Material gefertigt sind. Zusätzlich können die Schenkel abgerundete Köpfe aufweisen, die das Aufsetzen und Entnehmen erleichtern. Daneben ist auch eine zweiteilige Ausführung der Verbindung denkbar, wobei eine erste Aufnahme in den Spalt eingeführt wird und dort verbleibt. Durch die Aufnahme werden die Innenkanten des Spaltes abgerundet. Ein an der Leiste angeordnetes Eingriffselement kann so wiederholt mit der Aufnahme in Eingriff gebracht werden, ohne zu verschleißen.

Eine bevorzugte Ausführungsform der Eckverblendung bzw. Schutzabdeckung sieht vor, dass die Leiste aus Kunststoff oder Metall gebildet ist. Weiterhin wird als empfehlenswert erachtet, wenn die Eingriffselemente oder Steckverbinder aus Kunststoff oder Metall bestehen. Es ist dabei möglich, Leiste und Eingriffselemente als ein Werkstück, beispielsweise in einem Strangpress- oder Spritzgießverfahren zu fertigen oder aber die Verbindungselemente nachträglich an der Leiste anzusetzen, beispielsweise anzukleben, anzulöten oder anzuschweißen. Je nach gewünschter Haltbarkeit und in Abhängigkeit von den veranschlagten Kosten bietet sich die Verwendung von Kunststoff oder Metall sowohl für die Leiste als auch für die Verbindungselemente bzw. Steckverbinder an.

Im Folgenden wird die Erfindung anhand einer Ausführungsform mit Bezug auf die Figuren beispielhaft erläutert. Dabei stellt die beschriebene Ausführungsform lediglich eine mögliche Ausgestaltung dar, die für den jeweiligen Anwendungsfall modifiziert werden kann. Einzelne, für sich vorteilhafte Merkmale können gemäß der obigen Beschreibung der vorteilhaften Ausgestaltungen der beschriebenen Ausführungsform hinzugefügt oder weggelassen werden.

Es zeigen:
- Fig. 1: eine schematische Perspektivansicht eines erfindungsgemäßen automatischen Lagersystems;
- Fig. 2: eine schematische Perspektivansicht eines erfindungsgemäßen Wandpaneels;
- Fig. 3: eine schematische Perspektivansicht einer Tragstütze mit zwei montierten Wandpaneelen;
- Fig. 4: eine schematische Draufsicht auf eine Tragstütze mit einem Wandpaneel während eines Montagevorgangs;
- Fig. 5: eine schematische Draufsicht auf einen Ausschnitt einer montierten Verkleidung;
- Fig. 6: eine schematische Perspektivansicht auf ein Halteelement;
- Fig. 7: eine schematische Perspektivansicht auf eine Schutzabdeckung;
- Fig. 8: eine schematische Perspektivansicht eines Ausschnitts einer montierten Verkleidung;
- Fig. 9a: eine Detailansicht einer bevorzugten Ausführungsform einer erfindungsgemäßen Verkleidung,
- Fig. 9b: eine Detailansicht einer weiteren Ausführungsform der Verkleidung,
- Fig. 9c: die Detailansicht der Verkleidung aus Fig. 1a mit aufgesteckter Schutzabdeckung, jeweils in der Draufsicht,
- Fig. 10: eine Detailansicht der Verkleidung in perspektivischer Darstellung, und
- Fig. 11: eine Ausführungsform eines mit der Verkleidung versehenen Umlaufregals in Vorderansicht.

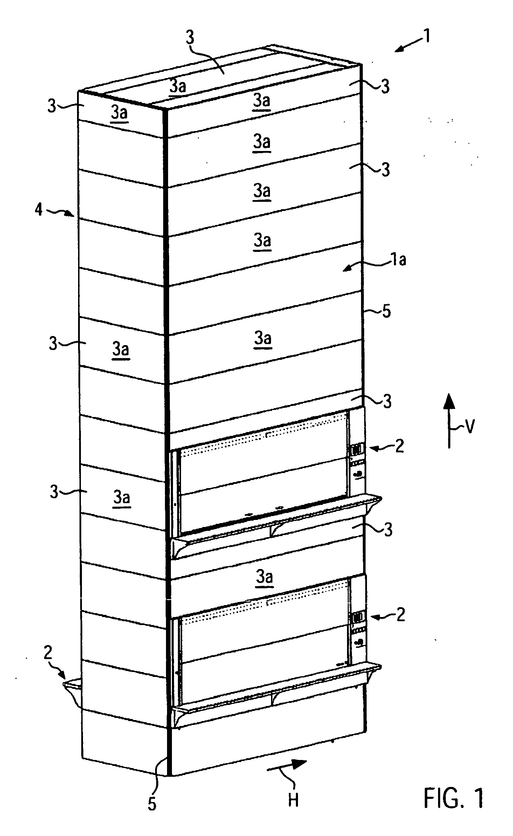

Zunächst wird der Aufbau eines erfindungsgemäßen Lagersystems mit Bezug auf die Fig. 1 beschrieben, die beispielhaft ein automatisches Lagersystem 1 mit zwei Entnahmekonsolen 2 zeigt. Das Lagersystem 1 kann als Paternoster-Lagersystem, Lagerlift oder als Lagersystem mit in einer Lagergasse verfahrbarem Kran ausgestaltet sein.

Das Lagersystem 1 ist vorzugsweise über seine gesamte Höhe in einer vertikalen Richtung V mit erfindungsgemäßen Wandpaneelen 3 verkleidet. Die Wandpaneele 3 bilden mit einer hier verdeckten, beispielsweise von Tragstützen gebildeten Tragstruktur eine Verkleidung 4 des Lagerinnenraums. Außenwandabschnitte 3a der Wandpaneele 3 bilden eine Wandaußenfläche 1a des Lagersystems 1. Auch die das Lagersystem 1 nach oben in vertikaler Richtung V verschließende Abdeckung kann von Wandpaneelen 3 gebildet sein. Über und unter den Entnahmekonsolen 2 an die Entnahmekonsolen 2 angrenzende Wandpaneele 3 können in vertikaler Richtung V eine verringerte Höhe aufweisen, durch welche die Abmessungen der Verkleidung an die Abmessungen der Entnahmekonsolen 2 angepasst ist. Auch die an dem in vertikaler Richtung V weisenden Ende des Lagersystems 1 angeordneten Wandpaneele 3 sind in dem gezeigten Ausführungsbeispiel in vertikaler Richtung V kürzer ausgestaltet, um die Gesamthöhe der Verkleidung 4 an die vorgegebene Höhe des Lagersystems 1 anzupassen. Die Wandpaneele 3 sind mit der sie haltenden Tragstruktur verrastet, vorzugsweise indem sie von außen auf die Tragstruktur gedrückt werden.

An den Ecken zwischen den Außenflächen der Verkleidung 4 sind Schutzabdeckungen 5 befestigt, die darunter angeordnete Seitenbereiche der Wandpaneele 3 verdecken. In einer horizontalen Richtung H oder in einer quer zur vertikalen Richtung V verlaufenden Richtung zueinander benachbarte Wandpaneele 3 sind gemeinsam an hier nicht gezeigten Tragstützen über Befestigungsabschnitte befestigt. Die formschlüssig auf den Tragstützen befestigten Schutzabdeckungen 5 stützen die Seitenbereiche benachbarter Wandpaneele gegeneinander ab und sichern somit die formschlüssigen Verbindungen zwischen den Wandpaneelen 3 und den zwischen benachbarten Wandpaneelen 3 angeordneten Tragstützen.

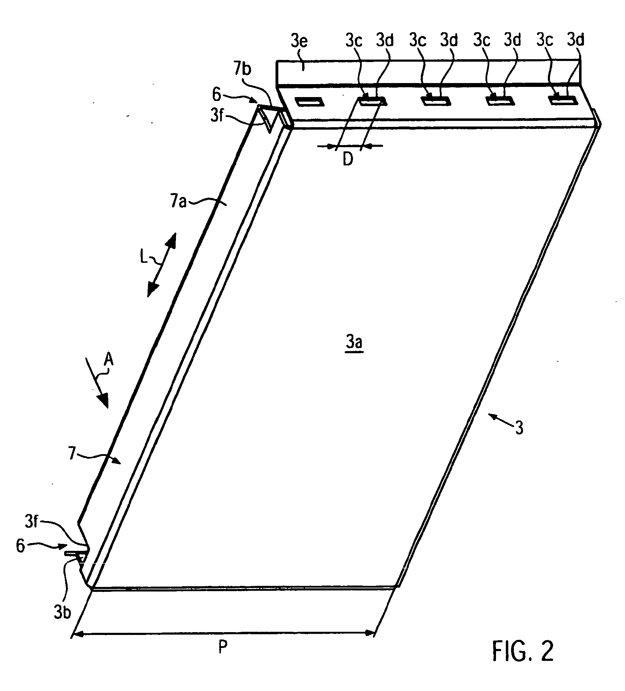

In Fig. 2 ist eine perspektivische Ansicht eines Wandpaneels 3 gezeigt. Das Wandpaneel 3 bildet einen Außenwandabschnitt 3a, von dem im montierten Zustand des Lagersystems die Außenwand der Verkleidung gebildet ist. Der Außenwandabschnitt 3a weist im zusammengebauten Zustand der Verkleidung vorzugsweise nach außen, d.h. von dem Lagervolumen des Lagersystems 1 weg. An sich gegenüberliegenden Enden des Außenwandabschnittes 3a sind Seitenbereiche 3b angeordnet. Die sich bezüglich des Außenwandabschnittes 3a gegenüberliegenden Seitenbereiche 3b sind zueinander symmetrisch aufgebaut und von einer abgekanteten Lasche gebildet. Vorzugsweise ist das Wandpaneel von einem Blech gebildet, das zur Herstellung der Seitenbereiche 3b gebogen oder tiefgezogen wird.

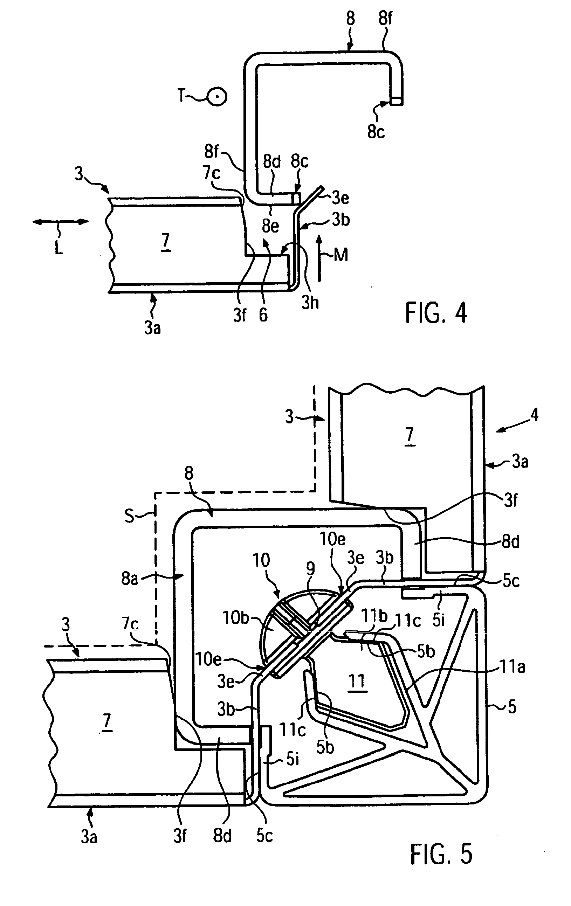

Das Wandpaneel 3a ist außerdem mit Befestigungsabschnitten 3c versehen, die als rechteckige Öffnungen im Seitenbereich 3b ausgestaltet sind. Die Befestigungsabschnitte 3c bilden Rastelemente, die mit als Fortsätze ausgestalteten Rastelementen an den Tragstützen des Lagersystems verrastbar sind. In den als Öffnungen ausgestalteten Befestigungsabschnitten 3c sind Halteflächen 3d angeordnet, die in eine Richtung A nach außen, d.h. von dem in Fig. 5 gezeigten Lagervolumen S weg weisen und bei montiertem Wandpaneel 3 dieses auf der Tragstütze halten. Die Halteflächen 3d sind jeweils von einer langen Seite eines im Wesentlichen rechteckigen Befestigungsabschnittes 3c gebildet. Die Halteflächen 3d weisen eine vorbestimmte Höhe D auf und sind in einer vorbestimmten Anzahl vorgesehen, wobei die Anzahl der Halteflächen und ihre Höhe D so bemessen sind, dass die Summe der Höhe D aller Halteflächen eines Seitenbereiches 3b größer als ein Drittel der Höhe P des Außenwandabschnittes 3a oder der Gesamthöhe des Wandpaneels 3 ist. In dem gezeigten Ausführungsbeispiel sind 5 Befestigungsabschnitte 3c an jeweils einem Seitenbereich 3b angeordnet. Alternativ können auch mehr als 5 Befestigungsabschnitte 3c vorgesehen sein.

Die Befestigungsabschnitte der Wandpaneele 3 können alternativ zu rechteckig geformten Öffnungen als ovale oder runde Öffnungen ausgestaltet sein. Des Weiteren können als Fortsätze geformte Befestigungsabschnitte vorgesehen sein. Bei einer aus einem Blech gefertigten Wandpaneele können die als Fortsätze geformten Befestigungsabschnitte von ausgestanzten und anschließend abgewinkelten Blechlaschen gebildet sein.

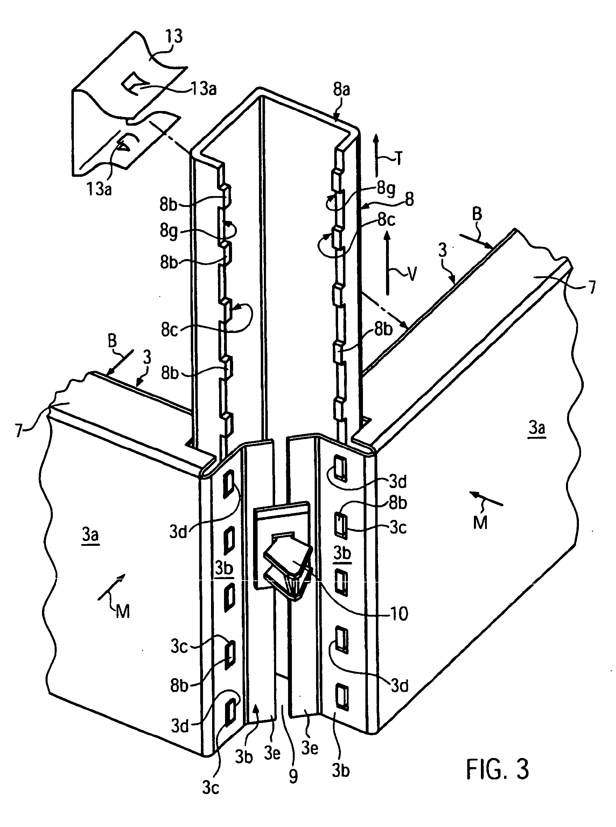

An einer dem Außenwandabschnitt 3a abgewandten Seite des Seitenbereichs 3b ist ein Haltefortsatz 3e vorgesehen, der sich schräg von dem Außenwandabschnitt 3a weg erstreckt. Die Haltefortsätze 3e zweier im montierten Zustand benachbarter Wandpaneele 3 bilden eine Aufnahme zur Befestigung eines Halteelementes, das in den Figuren 3, 5 und 6 gezeigt ist. Zugleich bilden die Haltefortsätze 3e Auflauf- bzw. Montageschrägen der Seitenbereiche 3b, die ein Aufsetzen und Einrasten der Wandpaneele 3 auf die Tragstruktur des Lagersystems 1 erleichtern.

In oder entgegen einer parallel zum Außenwandabschnitt verlaufenden Längsrichtung L liegen den Seitenabschnitten 3b Stützflächen 3f gegenüber, die mit den Seitenbereichen 3b eine Ausnehmung 6 zur Aufnahme einer Tragstütze bilden.

Quer zur Längsrichtung L ist das Wandpaneel 3 randseitig mit Versteifungen 7 versehen. Die Versteifungen 7 sind von einer zweifachen Abkantung gebildet und umfassen neben einem quer zum Außenwandabschnitt 3a verlaufenden Abschnitt 7a, der sich an den Außenwandabschnitt 3a anschließt, einen parallel zum Außenwandabschnitt 3a verlaufenden Abschnitt 7b. Quer zur Längsrichtung L oder parallel zum Außenwandabschnitt 3a ist der Seitenbereich 3b von dem quer zum Außenwandabschnitt 3a verlaufenden Abschnitt 7a der Versteifung 7 beabstandet, so dass bei montierter Verkleidung zwischen zwei Wandpaneelen ein Spalt verbleibt, in den ein Halteelement eingesetzt werden kann.

Fig. 3 zeigt in einer perspektivischen Ansicht eine Tragstütze 8 mit zwei an der Tragstütze 8 montierten Wandpaneelen 3. In einer Projektionsrichtung, die der vertikalen Richtung V entspricht, ist die Tragstütze 8 mit einem im Wesentlichen C-förmigen Querschnitt 8a versehen, an dessen sich gegenüberliegenden Enden 8g eine Vielzahl von Halteabschnitten 8b angeordnet sind. Jeweils an einem der sich gegenüberliegenden Enden 8g des C-förmigen Querschnitts ist eine Vielzahl von Halteabschnitten 8b vorgesehen, die in einer Längsrichtung der Tragstütze oder in vertikaler Richtung V in einer Reihe hintereinander angeordnet sind. Die Halteabschnitte 8b sind als rechteckige Fortsätze ausgestaltet, die sich jeweils parallel zur Außenwandfläche eines zugeordneten Wandpaneels von der Tragstütze 8 weg erstrecken.

Die Seitenabschnitte 3b der Wandpaneele 3 ragen in die Tragstütze 8 hinein, wobei die flächig geformten Haltefortsätze 3e in einer gemeinsamen Ebene innerhalb der Tragstütze 8 liegen. Zwischen zwei Haltefortsätzen 3e zweier quer zur Längserstreckung T der Tragstütze 8 benachbarter Wandpaneele 3 verbleibt im montierten Zustand der Wandpaneele 3 eine schlitzförmige Aufnahme 9. In die von den Seitenbereichen 3b gebildete schlitzförmige Aufnahme 9 ist ein Halteelement 10 aufgenommen, das mit den Haltefortsätzen 3e einen Formschluss bildet. Durch die formschlüssige Verbindung zwischen dem Halteelement 10 und den Haltefortsätzen 3e ist ein unbeabsichtigtes Lösen der Rastverbindungen zwischen den Wandpaneelen 3 und der Tragstütze 8 verhindert.

Die formschlüssige Verbindung zwischen den Wandpaneelen 3 und der Tragstütze 8 ist über die Befestigungsabschnitte 3c und Halteabschnitte 8b hergestellt, die im montierten Zustand miteinander verrastet sind. Jeweils ein Halteabschnitt 8b der Tragstütze 8 verrastet mit einem Befestigungsabschnitt 3c eines Wandpaneels 3. Die nach außen weisenden Halteflächen 3d der Wandpaneele 3 liegen in verrastetem Zustand auf nach innen weisenden Halteflächen 8c der Halteabschnitte 8b der Tragstütze 8 auf. Die Halteflächen 8c der Tragstütze 8 bilden folglich Gegenflächen zur den Halteflächen 3d der Wandpaneele 3.

Für die Montage der Rastverbindung werden die Wandpaneele 3 jeweils in einer Montagerichtung M, die senkrecht zur Wandaußenfläche 3a verläuft, von außen auf die Tragstütze 8 aufgesetzt. Aufgrund der durch die Haltefortsätze 3e gebildeten Montageschrägen gleiten die Seitenbereiche 3b über die Halteabschnitte 8b, bis Befestigungsabschnitte 3c der Wandpaneele 3 mit Halteabschnitten 8b der Tragstütze 8 fluchten; dann rasten die Wandpaneele 3 selbsttätig ein und ihre Montage ist abgeschlossen, soweit nicht noch Halteelemente und Kantenabdeckungen verwendet werden. Die Wandpaneele 3 können folglich ohne Werkzeug auf einer von Tragstützen 8 gebildeten Tragstruktur des Lagersystems 1 befestigt werden.

Um in einer vertikalen Richtung V übereinander angeordnete Wandpaneele 3 unmittelbar miteinander zu verbinden, können Federklammern 13 vorgesehen sein, die auf aneinander anliegende Versteifungen 7 aufgeschoben werden. Somit können die Wandpaneele 3 versteift und Eigenschwingungen der Wandpaneele 3 verringert werden. Die Federklammern 13 können Rasten 13a aufweisen, welche die Wandpaneele 3 oder deren Versteifungen 7 wenigstens abschnittsweise hintergreifen und somit ein unbeabsichtigtes Lösen der Federklammern 13 verhindern.

Aufgrund des Winkels zwischen den Seitenbereichen 3b und den Außenwandabschnitten 3a ist auch bei einer Verformung der Wandpaneele 3 aufgrund von von innen gegen die Wandpaneele 3 stoßenden Lagergut sichergestellt, dass sich die Wandpaneele 3 nicht von der Tragstütze 8 löst. Auch bei einer in Belastungsrichtung B von innen auf die Wandpaneele 3 wirkenden Belastung, beispielsweise durch herabfallendes Lagergut, können sich die Wandpaneele 3 nicht von der Tragstütze 8 lösen, da die von innen wirkende Belastung vollständig durch die Paarung der in oder entgegen der Belastungsrichtung B weisenden Halteflächen 3d und 8c aufgenommen wird.

Der Abschnitt der Tragstütze 8, auf dem die Halteflächen 3d der Wandpaneele 3 aufliegen, ist zwischen den Seitenbereichen 3b angeordnet. Die Seitenbereiche 3 oder die Halteflächen 3d können somit im montierten Zustand der Wandpaneele 3 die jeweils zugeordnete Tragstütze 8 des Lagersystems hintergreifen. Die Halteflächen 3d sind des Weiteren im Wesentlichen starr mit dem Außenwandabschnitt 3a verbunden. Trifft verrutschendes oder herabfallendes Lagergut von Innen oder aus dem Lagervolumen, beispielsweise in der Richtung B, auf den Außenwandabschnitt und wird der Außenwandabschnitt in Folge dessen nach außen gebogen, werden die im Wesentlichen starr mit dem Außenwandabschnitt 3a verbundenen Halteflächen 3d zusammen mit den angrenzenden Bereichen des Außenwandabschnittes gegenüber der Tragstütze 8 verdreht. Zugleich kann eine Biegung des Außenwandabschnittes 3a zu einer Verkürzung des Abstands zwischen den sich gegenüberliegenden Seitenbereichen 3b einer Wandpaneele 3 führen. Aufgrund der zwischen den Seitenbereichen angeordneten Tragstützen 8 führt eine solche Verformung des Außenwandabschnittes zu einem Andrücken der Seitenbereiche 3b an die Tragstützen 8 und somit zu einer Verstärkung der Verbindung zwischen Wandpaneelen 3 und Tragstützen 8.

In Fig. 4 sind ein Wandpaneel 3 und eine Tragstütze 8 in einem vormontierten Zustand gezeigt. Das Wandpaneel 3 wird in einer quer zur Wandaußenfläche 3a des Wandpaneels 3 oder quer zur Längserstreckung der Tragstütze 8 verlaufenden Montagerichtung M auf die Tragstütze 8 gedrückt. Der Haltefortsatz 3e des Wandpaneels 3 bildet mit einer bezüglich der Ausnehmung 6 gegenüberliegend angeordneten Schräge 7c der Versteifung 7 ein in Längsrichtung T der Tragstütze im Wesentlichen trichterförmiges Profil, welches das Aufsetzen des Wandpaneels 3 auf die Tragstütze 8 vereinfacht.

Während der Montage des Wandpaneels 3 wird der Seitenbereich 3b in einer Längsrichtung L des Wandpaneels 3 elastisch ausgelenkt, bis ein Seitenbereich 8d der Tragstütze 8, der parallel zur Wandaußenfläche 3a verläuft, in die Aufnahme 6 des Wandpaneels 3 eingeführt werden kann. Um die Montage des Wandpaneels 3 noch einfacher zu gestalten, kann durch eine Anschlagfläche 8e der Tragstütze 8 sowie eine Anschlagfläche 3h des Wandpaneels 3 eine Montageposition vorgegeben sein, bei der Befestigungsabschnitte 3c und Halteabschnitte 8b miteinander verrasten. Die Montageposition kann einer Position entsprechen, in der die Anschlagfläche 8e der Tragstütze 8 und die Anschlagfläche 3h des Wandpaneels 3 aufeinanderliegen.

Die Tragstütze 8 ist an ihrem äußeren Umfang mit Stützflächen 8f ausgestattet, die bei montierten Wandpaneelen 3 auf den Stützflächen 3f der Wandpaneele 3 aufliegen und im Wesentlichen in Längsrichtung L gegenüberliegende Befestigungsabschnitten der Wandpaneele 3 und gegenüber den Halteabschnitten 8c der Tragstütze 8 angeordnet sind.

Fig. 5 ist eine Draufsicht auf eine Tragstütze 8 mit zwei montierten Wandpaneelen 3. Die von den Tragstützen 8 gebildete Tragstruktur des Lagersystems und die von den Tragstützen 8 und Wandpaneelen 3 gebildete Verkleidung 4 umgeben ein Lagervolumen S, das schematisch durch eine gestrichelte Linie dargestellt ist. In eine von den Seitenbereichen 3b der Wandpaneele 3 gebildete schlitzförmige Aufnahme 9 ist ein Halteelement 10 eingeschoben. Das Halteelement 10 bildet schlitzförmige Aufnahmen 10e für die Haltefortsätze 3e der Wandpaneele 3 und somit eine formschlüssige Verbindung zwischen den eingesetzten Seitenbereichen 3b. Die schlitzförmigen Aufnahmen 10e sind als Hinterschneidungen in einem Halteabschnitt 10b des Halteelementes 10 ausgestaltet.

Zwischen den Seitenbereichen 8d der Tragstütze 8 ist ein Rastfortsatz 11 angeordnet, der von dem Halteelement 10 gebildet ist und sich im montierten Zustand aus dem C-förmigen Querschnitt 8a der Tragstütze 8 heraus erstreckt. Der Rastfortsatz 11 ist in eine Rastaufnahme 5a der Schutzabdeckung 5 eingesetzt. Der Rastfortsatz 11 ist im Wesentlichen zapfenförmig geformt. An einen keilförmigen Abschnitt 11a, der sich von der Tragstütze 8 weg erstreckt, schließt sich in Richtung der Tragstütze 8 ein Halteabschnitt 11 b an, der sich in Richtung der Tragstütze 8 verjüngt. Der Halteabschnitt 11b bildet Halteflächen 11c, die in Richtung der Tragstütze 8 schräg aufeinander zulaufen. Im montierten Zustand der Schutzabdeckung liegen die Halteflächen 11c des Rastfortsatzes 11 auf Halteflächen 5b der Schutzabdeckung 5 auf. Die Schutzabdeckung 5 ist somit formschlüssig zwischen den sich gegenüberliegenden Seitenbereichen 3b zweier benachbarter Wandpaneele gehalten. Stützabschnitte 5i der Schutzabdeckung 5 stützen die Seitenbereiche 3b der Wandpaneele 3. Auf den Stützabschnitten angeordnete Stützflächen 5c der Schutzabdeckung 5 liegen auf den sich gegenüberliegenden Seitenbereichen 3b flächig auf und stützen die Seitenbereiche 3b somit gegeneinander ab.

Um die Haltefortsätze 3e der benachbarten Wandpaneele 3 in die auf einer gemeinsamen Ebene angeordneten schlitzförmigen Aufnahmen 10e einführen zu können, ist zwischen den die Befestigungsabschnitte umfassenden Bereichen des Seitenbereichs 3b, die senkrecht zum Außenwandabschnitt 3a verlaufen, und den Haltefortsätzen 3e ein Winkel von etwa 135° vorgesehen.

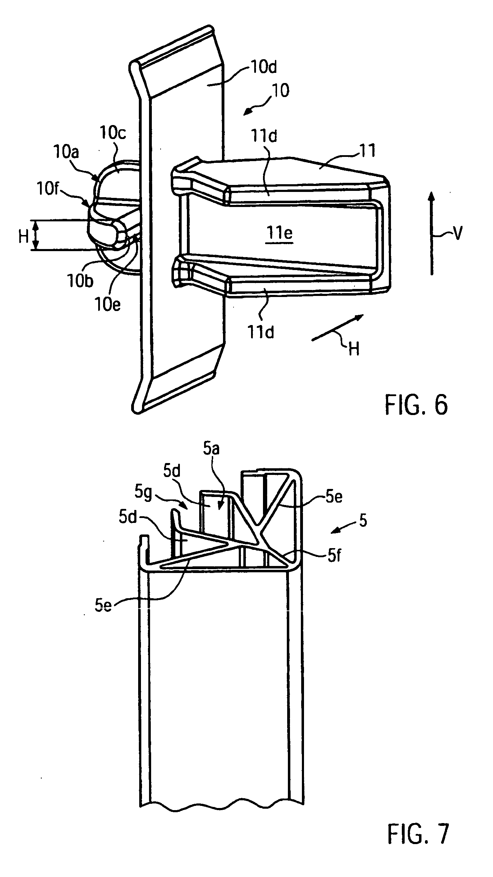

Fig. 6 ist eine schematische Perspektivansicht eines Halteelementes 10. Das Halteelement 10 umfasst ein mit einem kreuzförmigen Querschnitt oder mit einem kreuzförmigen Profil 10f versehenes Halteorgan 10a, das zwischen vier aneinander angrenzenden Wandpaneelen einsetzbar ist. Ein quer zur Längserstreckung L einer Tragstütze verlaufender Halteabschnitt 10b weist eine Höhe H auf, die etwas kleiner als die Breite eines zwischen Seitenbereichen 3b zweier in einer vertikalen Richtung V benachbarter Wandpaneele 3 ist. Ein quer zum Halteabschnitt 10b verlaufender Führungsabschnitt 10c ist hingegen etwas schmaler als die Breite des in einer horizontalen Richtung H zwischen zwei Seitenbereichen 3b verbleibenden, in Fig. 5 gezeigten als Schlitz ausgestalteten Aufnahme 9. Somit kann das Halteelement 10 auch bei montierten Wandpaneelen in einen Kreuzschlitz eingesetzt werden, der zwischen vier aneinander angrenzenden Wandpaneelen verbleibt.

Nach dem Einsetzen des Halteelementes 10 in den von vier aneinander angrenzenden Wandpaneelen gebildeten Kreuzschtitz wird dieses in einer vertikalen Richtung V nach oben oder unten verschoben, so dass der Halteabschnitt 10b hinter die Seitenbereiche 3b gelangt und durch diese formschlüssig gehalten wird. Ein dem Halteabschnitt 10b im montierten Zustand bezüglich der Seitenbereiche 3b gegenüber angeordnetes Stützorgan 10d, das im montierten Zustand auf den nach außen weisenden Flächen der Seitenbereiche 3b oder der Haltefortsätze 3e verbleibt, bildet dabei einen Gegenhalt. Das Stützorgan 10d ist elastisch verformbar ausgestaltet und bildet somit eine federelastische Kraft, die eine reibschlüssige Verbindung zwischen Stützorgan 10d und den Seitenbereichen 3b und/oder zwischen dem Halteabschnitt 10b und den Seitenbereichen 3b herstellt. Um die federelastische Verformbarkeit des Stützorgans 10d zu erhöhen, ist dieses insgesamt im Wesentlichen bogenförmig ausgeformt, wobei sich in vertikaler Richtung V gegenüberliegende Enden des Bogens auf den Seitenbereichen 3b aufliegen. Auf der den Seitenbereichen 3b abgewandten Seite des Stützorgans 10d ist der Rastfortsatz 11 angeordnet. Der Rastfortsatz 11 ist integraler Bestandteil des Halteelementes 10. Vorzugsweise ist das Halteelement 10 aus Kunststoff einstückig gegossen.

Der Rastfortsatz 11 umfasst zwei in vertikaler Richtung V parallel zueinander angeordnete Rasten 11d, die über einen gegenüber den Rasten 11d ausgestalteten Verbindungsabschnitt 11e miteinander verbunden sind.

Fig. 7 zeigt eine perspektivische Teilansicht einer Schutzabdeckung 5. Die Schutzabdeckung 5 ist von einem Profilkörper gebildet, der elastisch dehnbar ausgestaltet ist, um eine Aufweitung der zangenförmigen Rastaufnahme 5a beim Fügen der Rastverbindung zwischen Halteelement 10 und Schutzabdeckung 5 zu ermöglichen. Zur Verringerung der Steifigkeit der Rastaufnahme 5a sind die Seitenwände 5d der Rastaufnahme 5a über den größeren Anteil ihrer Länge freitragend gestaltet. Das Profil 5 versteifende Stützwände 5e und 5f sind an einer der Öffnung 5g abgewandten Seite der Rastaufnahme 5a positioniert, so dass trotz einer Versteifung der Schutzabdeckung 5 die Elastizität der Rastaufnahme 5a erhalten bleibt.

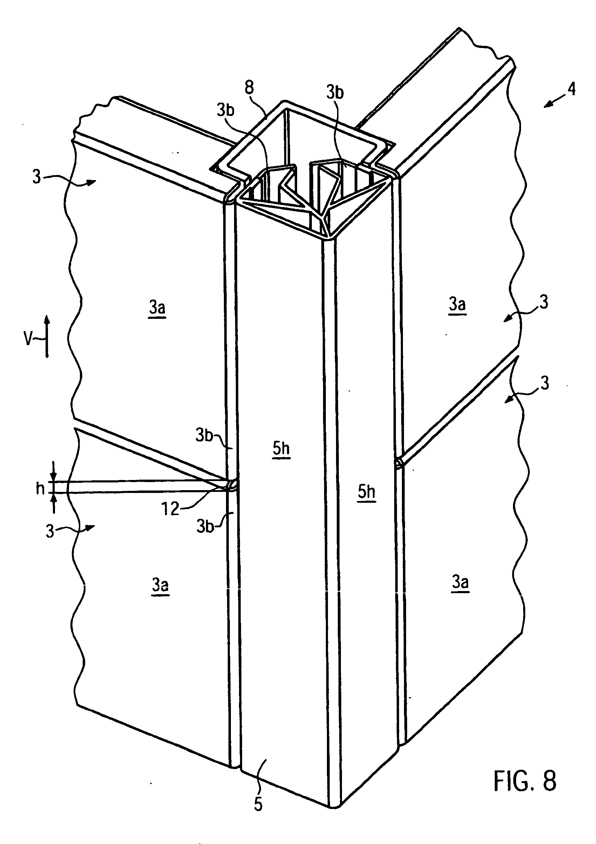

In Fig. 8 ist eine Teilansicht einer montierten Verkleidung 4 gezeigt. Insgesamt vier Wandpaneele 3 sind mit einer Tragstütze 8 verrastet. Die Seitenbereiche 3b der Wandpaneele 3, die auf hier nicht gezeigte Seitenbereiche 8d der Tragstütze 8 aufgesetzt sind, werden durch wenigstens zwei jeweils einem Paar von Wandpaneelen 3 zugeordnete Halteelemente 10 gesichert. Des Weiteren sichert auch die mit den Halteelementen verrastete Schutzabdeckung 5 das Wandpaneel 3, indem diese auf den Seitenbereichen 3b aufliegend eine Ablösung der Seitenbereiche 3b von den Seitenbereichen der Tragstütze verhindert.

Die Schutzabdeckung 5 bildet ein Kantenprofil mit Außenflächen 5h. Die Außenflächen 5h der Schutzabdeckung 5 fluchten mit den Flächen der Außenwandabschnitte 3a. Somit werden Vorsprünge an der Außenfläche des Lagersystems vermieden, die ein Hängenbleiben von am Lagersystem vorbei bewegten Fahrzeugen oder Gegenständen verursachen könnten.

Zwischen den in vertikaler Richtung V benachbarten Seitenbereichen 3b verbleibt im montierten Zustand der Wandpaneele 3 ein Spalt 12, der eine Höhe h aufweist. Die Höhe h ist etwas größer als die in Fig. 6 gezeigte Höhe h des Halteabschnitts 10b des Halteelementes 10 und ermöglicht somit ein Einschieben des Halteorgans 10a zwischen vier in einer vertikalen Richtung V benachbarten Wandpaneelen 3.

Neben der gezeigten Ausführungsform eines Lagersystems sind im Sinne der Erfindung weitere vorteilhafte Ausführungsformen möglich. So können anstelle des gezeigten Paternoster-Lagersystems auch andere Typen von Lagersystemen, beispielsweise Lagerlifte, gemäß der Erfindung ausgestaltet werden.

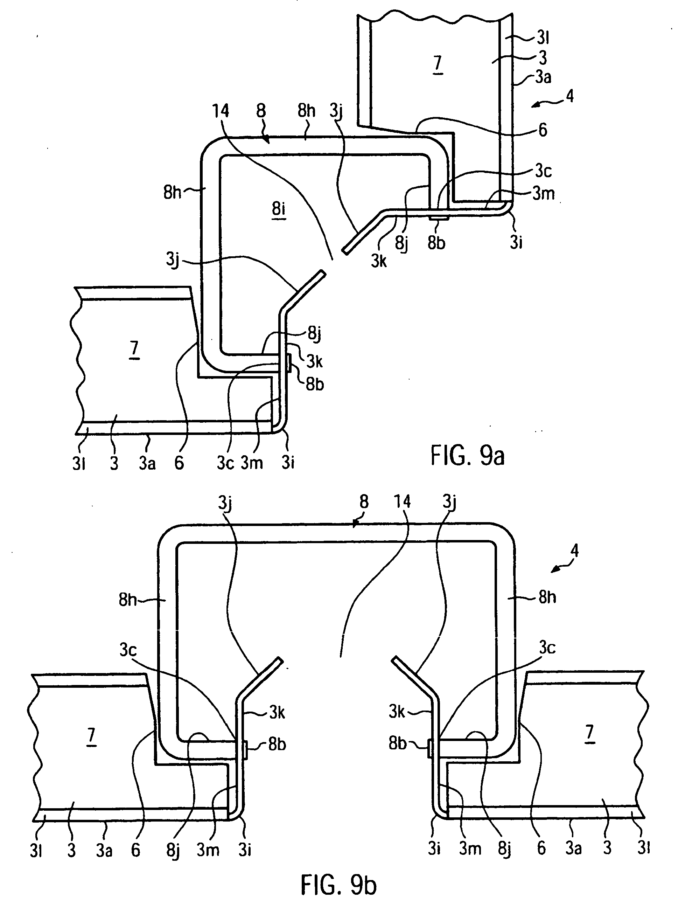

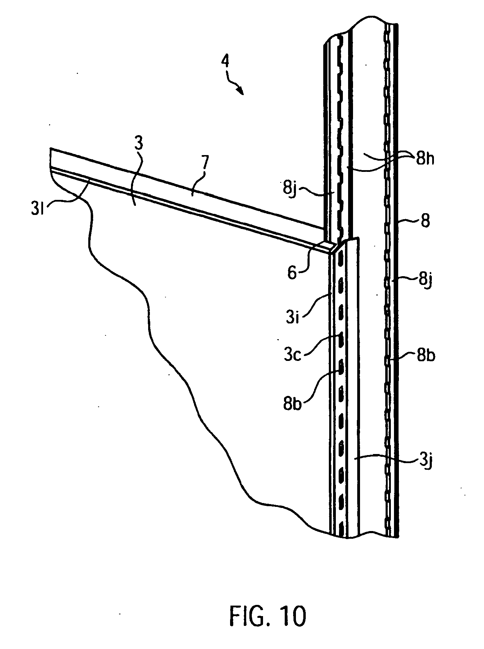

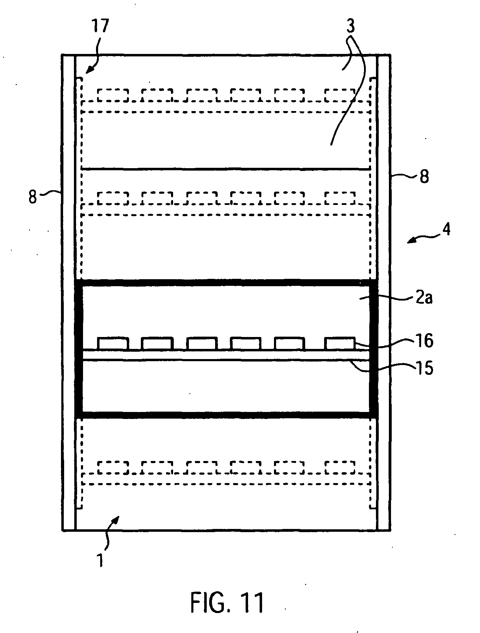

Fig. 9a zeigt eine weitere bevorzugte Ausführungsform einer Verkleidung 4 in Draufsicht, wobei für Elemente, die in Funktion und Aufbau den Elementen der Ausführungsbeispiele der Figuren 1 bis 8 entsprechen, dieselben Bezugszeichen verwendet werden. Dargestellt ist ein Pfosten bzw. eine Tragstütze 8 der Regalverkleidung 4 mit an der Tragstütze 8 angeordneten Wandpaneelen 3, insbesondere aus Stahlblech. Die Verkleidung 4 umfasst meist vier entsprechende Tragstützen 8 an ihren vier Ecken, bei zusammengesetzten Regalsystemen (nicht dargestellt) können allerdings auch sechs oder mehr Tragstützen 8 vorhanden sein. Denkbar ist jedoch auch, dass die Verkleidung 4 lediglich zwei Tragstützen 8 aufweist und im Übrigen an einer Wand angestellt ist, wobei nur die Vorderseite eines Regals mit den Wandpaneelen 3 verkleidet wird. Bei den Wandpaneelen 3 handelt es sich im Ausführungsbeispiel der Fig. 1 um Bleche, mit denen die Regalseiten verblendet sind und durch die gleichzeitig Lagergut 16 (vgl. Fig. 11) am Herausfallen aus einem Umlaufregal 1 gehindert wird. Die Verkleidung 4 verfügt im Ausführungsbeispiel über Pfosten bzw. Tragstützen 8, die als C- bzw. L-Profil mit zwei im Winkel von 90° angeordneten Schenkeln 8h ausgebildet ist. Hier sind selbstverständlich auch kleinere oder größere Winkel vorstellbar, sofern die Stabilität der Verkleidung 4 dadurch nicht beeinträchtigt wird. Die Schenkel 8h begrenzen den Innenraum 8i der Tragstütze 8 und weisen zusätzlich zum Innenraum 8i hin abgewinkelte Längsseiten 8j auf. An diesen Längsseiten 8j ist eine Vielzahl von gleichmäßig beabstandeten, zahnartigen Vorsprüngen bzw. Halteabschnitten 8b ausgebildet, die Halteabschnitte 8b bilden (vgl. Fig. 10). Von der Tragstütze 8 weg erstrecken sich zwei Wandpaneele 3, deren der Tragstütze 8 zugewandte Enden 3m Abkantungen 3i aufweisen. Diese umgreifen die Schenkel 8h.

Die Abkantungen 3i weisen im Ausführungsbeispiel einen Winkel von 90° zu den Außenwandabschnitten 3a der Wandpaneelen 3 auf und erstrecken sich im Montagezustand rechtwinklig zum Pfosten- bzw. Tragstützeninneren 8i hin. In ihren an der Längsseite 8j des Schenkels 8h anliegenden Flächen 3k sind in den Abkantungen 3i Befestigungsabschnitte 3c in Form von Ausnehmungen eingebracht (z. B. durch Stanzen oder Laserschneiden), die mit den an den abgewinkelten Längsseiten 8j der Tragstützen 8 vorgesehenen Halteabschnitten 8b in Eingriff bringbar sind. Bei der Montage der Verkleidung 4 werden die Wandpaneele 3 auf die aufrecht stehenden Tragstützen 8 aufgesteckt und über die Längsseiten 8j der Tragstützen 8 gestülpt. Dabei rasten die als Vorsprünge ausgestalteten Halteabschnitte 8b in die Befestigungsabschnitte 3c ein und verbinden Wandpaneeten 3 und Tragstützen 8 ohne Verwendung von Schrauben oder sonstigen Befestigungselementen. Das einfache "Einfädeln" der Tafeln bzw. Wandpaneelen 3, also das In-Eingriffbringen der Halteabschnitte 8b der Tragstütze 8 und der Ausnehmungen bzw. Befestigungsabschnitte 3c in den Abkantungen 3i, wird durch die zusätzliche Abwinkelung 3j der Abkantungen 3i möglich. Die Abwinkelung 3j weist im Ausführungsbeispiel der Fig. 1a einen Winkel von 45° auf. Die Abwinkelung 3j erstreckt sich in Richtung der Längsseite 8j des an der Tragstütze 8 gegenüberliegenden Schenkels 8h. Beim Ansetzen der Wandpaneelen 3 an der Tragstütze 8 gleitet zunächst die Abwinkelung 3j auf die Längsseite 8j der Tragstütze 8 auf und bewirkt dabei ein leichtes Aufbiegen der Abkantung 3i. Diese kann dadurch über die Halteabschnitte 8b geschoben werden und federt danach wieder in ihre ursprüngliche Position zurück. Dabei werden die Halteabschnitte 8b mit den Befestigungsabschnitten 3c verrastet.

Durch die Abwinkelung 3j wird auch der durch die Schenkel 8h begrenzte Innenraum 8i der Tragstütze 8 nahezu geschlossen. Die Abwinkelung 3j bildet mit der formgleichen Abwinkelung 3j des an der Tragstütze 8 gegenüberliegend angeordnetes Wandpaneels 3 einen Spalt 14, der als Aufnahme für eine aufsteckbare Eckverblendung bzw. Schutzabdeckung 5 (vgl. Fig. 1c) dient. Zur Demontage der Wandpaneelen 3 kann, sobald ein erster Befestigungsabschnitt 3c vom eingreifenden Halteabschnitt 8b gelöst wurde, jedes Wandpaneel 3 nach Art eines Reißverschlusses von der Tragstütze 8 gelöst werden.

Bei der in Fig. 9a dargestellten Verkleidung 4 weisen die Wandpaneelen 3 an ihren oberen Kanten 3I eine rechtwinklige Abknickung auf, die eine Versteifung 7 bildet und im Bereich der Tragstütze 8 eine Ausnehmung 6 aufweist. Der Außenwandabschnitt 3a der Wandpaneelen 3 ist zudem von der Tragstütze 8 beabstandet angeordnet. Hierdurch wird die Montage der Wandpaneelen 3 vereinfacht, da die Wandpaneelen 3 leichter auf die Tragstützen 8 aufgesetzt und einfacher mit den Vorsprüngen bzw. Halteabschnitten 8b verrastet werden können. Bei einer Beaufschlagung der Wandpaneelen 3 verhindern die abgesetzten Wandpaneelen 3 zudem, dass sich die verrasteten Befestigungsabschnitte 3c aufgrund der Durchbiegung der Wandpaneelen 3 von den Vorsprüngen bzw. Halteabschnitten 8b lösen. Die Anordnung und Ausgestaltung der Verbindung zwischen Wandpaneelen 3 und Tragstützen 8 erweist sich als besonders widerstandsfähig gegenüber Beaufschlagung der Verkleidung 4, beispielsweise durch aus den Regalen oder den Lagergutträgern 15 herausfallendes Lagergut 16 (vgl. Fig. 3). Hierbei kommt es durch das auf die Verkleidung 4 auftreffende Lagergut 16 zu einer plastischen Verformung der Wandpaneelen 3 sowie der Abkantung 3i, wodurch die gesamte Energie aufgenommen wird. Aufgrund der zu den Tragstützen 8 abgesetzten Anordnung der Wandpaneelen an der Vorderseite der Verkleidung 4, werden bei Verformung der Wandpaneelen 3 die Befestigungsabschnitte 3c weiter auf die Halteabschnitte 8b aufgeschoben und somit ein Lösen der Verrastung verhindert.

Fig. 9b zeigt ein weiteres Ausführungsbeispiel der vorliegenden Erfindung, wobei hier der Träger bzw. die Tragstütze 8 nicht als C- oder L- sondern als U-Profil ausgeführt ist. Für Elemente, die in Funktion und Aufbau den Elementen der Ausführungsbeispiele der Figuren 1 bis 9a entsprechen, werden dieselben Bezugszeichen verwendet. Die hier dargestellte Ausführungsform eignet sich somit zur Verkleidung einer Regalfront oder zur Bildung eines Verbundes aus mehreren nebeneinander angeordneten Verkleidungen 4. Die Montage erfolgt wie bereits oben dargestellt, durch einfaches Aufsetzen bzw. Aufstülpen der Wandpaneelen 3 auf die Tragstützen 8 und nachfolgendes Verrasten der Befestigungsabschnitte 3c in den Abkantungen 3i der Wandpaneelen 3 mit den Halteabschnitten 8b an den Tragstützen 8. Auch hier bilden die die Abkantungen 3i verlängernden Abwinkelungen 3j einen Spalt 14 aus. Dieser kann verwendet werden, um Verblendungsleisten, ähnlich wie Eckverblendungen oder Schutzabdeckungen 5 (vgl. Fig. 1c) am Regal zu befestigen oder Kabel im Raum 8i zu verlegen.

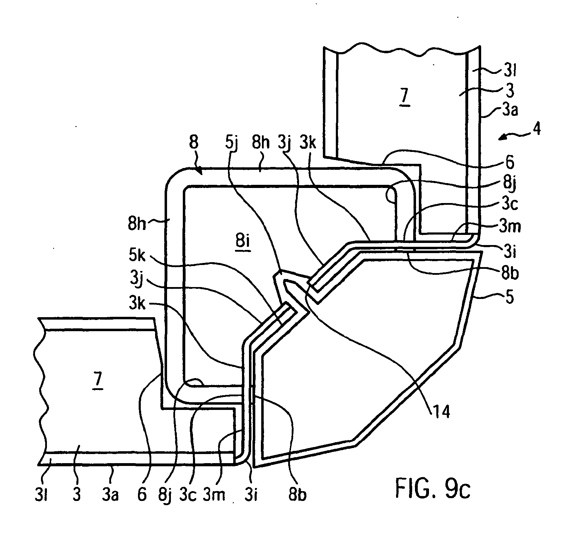

Fig. 9c zeigt einen Pfosten bzw. eine Tragstütze 8 mit angesetzten Wandpaneelen 3, wobei die Tragstütze 8 zusätzlich durch eine Schutzabdeckung 5 verkleidet ist. Die Schutzabdeckung 5 ist hierbei als Schiene ausgebildet, in deren dem Innenraum 8i der Tragstütze 8 zugewandten Rückseite 5k Steckverbinder 5j für den Eingriff mit dem Spalt 14 angeformt sind. Durch die Fertigung der Schiene aus einem elastischen Material und durch deren hohle Ausführung können die Steckverbinder 5j zerstörungsfrei von der Tragstütze 8 gelöst werden. Zur Montage werden die Steckverbinder 5j nach Aufsetzen der Schiene durch den Spalt 14, der durch die Abwinkelungen 3j von zwei Wandpaneelen 3 gebildet wurde, eingeführt und hintergreifen die Abwinklungen 3j. Die Schutzabdeckung 5 der Tragstütze 8 kann somit ohne Werkzeugeinsatz durchgerührt werden. Zur Demontage werden die Steckverbinder 5j aus dem Spalt 14 gezogen, ohne dabei beschädigt zu werden und sind somit wiederverwendbar.

Fig. 10 zeigt eine weitere Detailansicht einer bevorzugten Ausführungsform der erfindungsgemäßen Regalverkleidung bzw. Verkleidung 4 ohne aufgesteckte Schutzabdeckung 5. Deutlich zu erkennen ist hier die Tragstütze 8 der Verkleidung 4. An der Tragstütze 8 angeordnet ist im Ausführungsbeispiel zunächst nur ein Wandpaneel 3. Dieses weist eine Abkantung 3i auf, die einen Schenkel 8h der Tragstütze 8 umgreift. Die Abkantung 3i weist Befestigungsabschnitte 3c auf, die mit Halteabschnitten 8b in Eingriff stehen, die an den Längsseiten 8j der Schenkel 8h angeordnet sind. Die Längsseiten 8j sind im Winkel von 90° zum Schenkel 8h abgewinkelt und erlauben aufgrund ihrer Ausgestaltung eine schraubenlose Verbindung zwischen Wandpaneel 3 und Tragstütze 8. Zusätzlich zur Abkantung 3i weist das Wandpaneel 3 eine Abwinkelung 3j auf, die sich zur abgewinkelten Längsseite 8j des gegenüberliegenden Schenkels 8h der Tragstütze 8 hin erstreckt. Diese Abwinkelung 3j ermöglicht bei der Montage der Wandpaneelen 3 das Aufgleiten auf die Tragstütze 8. Hierbei wird die Abkantung 3i soweit aufgespreizt, dass die Befestigungsabschnitte 3c mit den Halteabschnitten 8b in Eingriff gebracht werden können.

Das Wandpaneel 3 verfügt zudem an seiner oberen Kante 31 über eine Abknickung, die sich zum Regalinneren hin erstreckt und eine Versteifung 7 bildet. Die Abknickung bzw. Versteifung weist im Bereich der Tragstütze 8 eine Ausnehmung 6 auf, die nach Art einer Führung das Aufsetzen der Wandpaneelen 3 auf die Tragstütze 8 vereinfacht. Das Wandpaneel 3 besteht im Ausführungsbeispiel der Fig. 2 aus Blech, denkbar wäre jedoch auch die Verwendung von Wandpaneelen 3 aus einem Kunststoffmaterial, zum Beispiel GfK.

Fig. 11 zeigt eine Ausführungsform eines mit einer Verkleidung 4 versehenen Umlaufregals 1. Die Verkleidung 4 bilden hier insgesamt drei Wandpaneelen 3, die an Tragstützen 8 angeordnet sind. Bei höheren Regalen sind meist zehn oder mehr derartiger Wandpaneelen 3 übereinander vorgesehen. Das Umlaufregal 1 der Fig. 11 weist eine Entnahmeöffnung 2a auf, über die ein Bediener (nicht dargestellt) Zugriff auf die im Umlaufregal 1 nach Art eines Paternosters umlaufenden Lagergutträger 15 erhält. Das Lagergut 16 wird beim Umlauf der Lagergutträger 15 beschleunigt und erfährt am oberen und unteren Wendepunkt 17 des Umlaufregals 1 eine Zentrifugalbeschleunigung. Unzureichend gesichertes Lagergut 16 kann hierdurch umkippen oder aus den Lagergutträgern 15 herausgeschleudert werden und den Bediener des Umlaufregals 1 verletzen. Die oben beschriebene Montage der Wandpaneelen 3 der Verkleidung 4 gewährleistet eine hohe Widerstandskraft gegen aus dem Umlaufregal 1 geschleuderte Gegenstände, da es in Art einer definierten Knautschzone zu einer plastischen Verformung der Wandpaneelen 3 und der Abkantungen 3i (vgl. Fig. 1), nicht jedoch zum Lösen der Rastverbindung zwischen Wandpaneelen 3 und Tragstützen 8 kommt.

Die vorgestellte Verkleidung 4 ist somit gegenüber herkömmlichen Regalverkleidungen 4 in zweifacher Hinsicht vorteilhaft. Erstens kann die Verkleidung 4 aufgrund der schraubenlosen Verbindung von Wandpaneelen 3 und Tragstützen 8 besonders leicht und schnell montiert werden. Zweitens bietet die Verkleidung 4 einen verbesserten Schutz gegen aus dem Umlaufregal 1 fallendes Lagergut 16, da auf die verkleidenden Wandpaneelen 3 wirkende Kräfte effektiver aufgenommen werden können und es nicht zum Ablösen der Wandpaneelen 3 aufgrund von ausreißenden Schraub- oder Nietverbindungen kommt.

## Patentansprüche

1. Automatisches Lagersystem (1) mit einem Lagervolumen (S), das von einer aus wenigstens zwei Wandpaneelen (3) gebildeten Verkleidung (4) wenigstens abschnittsweise umgeben ist, wobei die Wandpaneele (3) an einer Tragstruktur befestigt sind, **dadurch gekennzeichnet, dass** die Wandpaneele mit der Tragstruktur (8) verrastet sind, und dass Seitenbereiche (3b) zweier benachbarter Wandpaneele (3) eine schlitzförmige Aufnahme (9) bilden, in die ein Halteelement (10) eingeschoben ist.

2. Automatisches Lagersystem (1) nach Anspruch 1, **dadurch gekennzeichnet, dass** zumindest ein Wandpaneel (3) an gegenüberliegenden Seiten eines eine nach außen weisende Wandaußenfläche (1a) bildenden Außenwandabschnittes (3a) mit zwei sich quer zum Außenwandabschnitt (3a) erstreckenden Seitenbereichen (3b) mit jeweils wenigstens einem in die Seitenbereiche (3b) integrierten und als Rastelement mit wenigstens einer nach außen weisenden Haltefläche (3d) ausgestalteten Befestigungsabschnitt (3c) versehen ist.

3. Automatisches Lagersystem (1) nach Anspruch 1 oder 2, **dadurch gekennzeichnet, dass** sich die wenigstens eine Haltefläche (3d) eines Seitenbereiches (3b) in einer parallel zum Außenwandabschnitt (3a) verlaufenden vertikalen Richtung (V) Ober insgesamt wenigstens ein Drittel der Höhe (P) des Außenwandabschnittes (3a) erstrecken.

4. Automatisches Lagersystem (1) nach einem der Ansprüche 1 bis 3, **dadurch gekennzeichnet, dass** zumindest ein Wandpaneel (3) den Seitenbereichen (3b) in einer parallel zum Außenwandabschnitt (3a) verlaufenden Richtung gegenüberliegende Stützflächen (3f) aufweist, die mit den Seitenbereichen (3b) eine Ausnehmung (6) zur Aufnahme jeweils einer Tragstütze (8) bilden.

5. Automatisches Lagersystem (1) nach einem der Ansprüche 1 bis 4, **dadurch gekennzeichnet, dass** der Befestigungsabschnitt (3c) von einer sich im Wesentlichen parallel zum Außenwandabschnitt (3a) erstreckenden Öffnung gebildet ist.

6. Automatisches Lagersystem (1) nach einem der Ansprüche 1 bis 5, **gekennzeichnet durch** eine Tragstütze (8) zum Aufbau der das Lagervolumen (S) umgebenden Tragstruktur des Lagersystems (1) mit wenigstens einem Halteabschnitt (8b) zur Befestigung von Wandpaneelen (3), der als Rastelement mit wenigstens einer in Richtung des Lagervolumens (S) weisenden Haltefläche (8c) ausgestaltet ist.

7. Automatisches Lagersystem (1) nach Anspruch 6, **dadurch gekennzeichnet, dass** der Halteabschnitt (8b) von einem in die Tragstütze (8) integrierten Fortsatz gebildet ist, der sich parallel zur Haltefläche (8c) von der Tragstütze (8) weg erstreckt.

8. Automatisches Lagersystem (1) nach Anspruch 6 oder 7, **dadurch gekennzeichnet, dass** die Tragstütze (8) einen im Wesentlichen C-förmigen Querschnitt (8a) aufweist, an dessen sich gegenaberliegenden Enden (8g) die Halteabschnitte (8b) zur Befestigung jeweils wenigstens zweier Wandpaneele (3) angeordnet sind.

9. Automatisches Lagersystem (1) nach einem der Ansprüche 1 bis 8, **dadurch gekennzeichnet, dass** eine mit dem Halteelement (10) verrastbar ausgestaltete Schutzabdeckung (5) vorgesehen ist, die die Seitenbereiche (3b) benachbarter Wandpaneele (3) nach außen abdeckt.

10. Automatisches Lagersystem (1) nach Anspruch 9, **dadurch gekennzeichnet, dass** die Schutzabdeckung (5) wenigstens eine Außenfläche (5h) bildet, die mit einer von Außenwandabschnitten (3a) der Wandpaneele (3) gebildeten Wandaußenfläche (1a) wenigstens abschnittsweise fluchtet.

11. Automatisches Lagersystem (1) nach Anspruch 9 oder 10, **dadurch gekennzeichnet, dass** die Schutzabdeckung (5) wenigstens einen Stützabschnitt (5i) umfasst, der wenigstens abschnittsweise auf den Seitenbereichen (3b) zueinander benachbarter Wandpaneele (3) aufliegt.

12. Baukasten für Lagersysteme (1), wobei wenigstens eine Tragstütze (8) zum Aufbau einer ein automatisches Lagervolumen (S) umgebenden Tragstruktur eines Lagersystems (1) mit wenigstens einem Halteabschnitt (8b) zur Befestigung von Wandpaneelen (3), der als Rastelement mit wenigstens einer in Richtung des Lagervolumens (S) weisenden Haltefläche (8c) ausgestaltet ist und/oder wenigstens ein mit der Tragstütze (8) verrastbares Wandpaneel (3), das an gegenüberliegenden Seiten eines eine nach außen weisende Wandaußenfläche (1a) bildenden Außenwandabschnittes (3a) mit zwei sich quer zum Außenwandabschnitt (3a) erstreckenden Seitenbereichen (3b) mit jeweils wenigstens einem in die Seitenbereiche (3b) integrierten und als Rastelement mit wenigstens einer nach außen weisenden Haltefläche (3d) ausgestalteten Befestigungsabschnitt (3c) versehen ist, wobei der Baukasten wenigstens zwei Wandpaneele (3) umfasst, wobei ein Halteelement (10) vorgesehen ist, das zwischen Seitenbereiche (3b) zweier in einer horizontalen Richtung (H) benachbarter Wandpaneele (3) formschlüssig einsetzbar ausgestaltet ist und durch das die Seitenbereiche (3b) gegeneinander abstützend verbindbar sind.

13. Baukasten nach Anspruch 12, **dadurch gekennzeichnet, dass** das Halteelement (10) in einer horizontalen Richtung (H) ein kreuzförmiges Profil (10f) aufweist.

14. Verfahren zur Montage eines automatischen Lagersystems (1), insbesondere aus einem Baukasten nach einem der Ansprüche 12 oder 13, bei dem wenigstens ein Wandpaneel (3) auf wenigstens eine Tragstütze (8) im Wesentlichen quer zu einer Längsrichtung (L) der Tragstützen (8) aufgesetzt wird, wobei während des Aufsetzens wenigstens ein Halteabschnitt (8b) der Tragstützen (8) in wenigstens einen Befestigungsabschnitt (3c) des Wandpaneels (3) selbsttätig formschlüssig eingreift, wobei ein Halteelement (10) in einen von vier aufeinander treffenden Wandpaneelen (3) gebildeten Kreuzschlitz eingesetzt und anschließend in einer vertikalen Richtung (V) verschoben wird.

15. Verfahren nach Anspruch 14, **dadurch gekennzeichnet, dass** eine Schutzabdeckung (5) mit dem Halteelement (10) verrastet wird.

## Claims

1. Automatic storage system (1) having a storage volume (S) that is enclosed at least in segments by a cladding (4) formed of at least two wall panels (3), wherein the wall panels (3) are attached to a support structure, **characterised in that** the wall panels are latched to the support structure (8), and **in that** side regions (3b) of two adjacent wall panels (3) form a slot-shaped receptacle (9) into which a mounting element (10) is slid.

2. Automatic storage system (1) according to claim 1, **characterised in that** at least one wall panel (3) is, on opposing sides of an outer wall segment (3a) forming an outward facing wall outer surface (1 a), provided with two side regions (3b) that extend transverse to the outer wall segment (3a), each of which has at least one attachment segment (3c) integrated into the side regions (3b) and designed as a latching element having at least one outward facing mounting surface (3d).

3. Automatic storage system (1) according to either claim 1 or claim 2, **characterised in that** the at least one mounting surface (3d) of a side region (3b) extends in a vertical direction (V) extending parallel to the outer wall segment (3a) over a total of at least one third of the height (P) of the outer wall segment (3a).

4. Automatic storage system (1) according to any of claims 1 to 3, **characterised in that** at least one wall panel (3) has support surfaces (3f) positioned opposite the side regions (3b) in a direction extending parallel to the outer wall segment (3a), which support surfaces form, with the side regions (3b), a recess (6) for receiving a support (8) each.

5. Automatic storage system (1) according to any of claims 1 to 4, **characterised in that** the attachment segment (3c) is formed by an opening extending substantially in parallel to the outer wall segment (3a).

6. Automatic storage system (1) according to any of claims 1 to 5, **characterised by** a support member (8) for constructing the support structure of the storage system (1), the support structure enclosing the storage volume (S), the support member (8) having at least one mounting segment (8b) for the attachment of wall panels (3), which mounting segment is designed as a latching element having at least one mounting surface (8c) facing in the direction of the storage volume (S).

7. Automatic storage system (1) according to claim 6, **characterised in that** the mounting segment (8b) is formed by an extension integrated into the support member (8) and extending away from the support (8), parallel to the mounting surface (8c).

8. Automatic storage system (1) according to either claim 6 or claim 7, **characterised in that** the support member (8) has a substantially C-shaped cross-section (8a), at the opposing ends (8g) of which the mounting segments (8b), each for the attachment of at least two wall panels (3), are arranged.

9. Automatic storage system (1) according to any of claims 1 to 8, **characterised in that** a protective cover (5) is provided that can be latched to the mounting element (10) and covers the side regions (3b) of adjacent wall panels (3) towards the outside.

10. Automatic storage system (1) according to claim 9, **characterised in that** the protective cover (5) forms at least one outer surface (5h) that is flush, at least in segments, with a wall outer surface (1 a) formed by outer wall segments (3a) of the wall panels (3).

11. Automatic storage system (1) according to either claim 9 or claim 10, **characterised in that** the protective cover (5) comprises at least one support segment (5i) that rests, at least in segments, on the side regions (3b) of wall panels (3) that are adjacent to one another.

12. Kit for storage systems (1), wherein at least one support (8) for constructing a support structure of a storage system (1), which support structure encloses an automatic storage volume (S), has at least one mounting segment (8b) for attaching wall panels (3) which is designed as a latching element having at least one mounting surface (8c) facing in the direction of the storage volume (S), and/or at least one wall panel (3) which can be latched to the support member (8) and which, on opposing sides of an outer wall segment (3a) forming an outward facing outer wall surface (1 a), is provided with two side regions (3b) that extend transverse to the outer wall segment (3a), each having at least one attachment segment (3c) integrated into the side regions (3b) and designed as a latching element having at least one outward facing mounting surface (3d), wherein the kit comprises at least two wall panels (3), wherein a mounting element (10) is provided that is designed such that it can be inserted in a positive fit between side regions (3b) of two wall panels (3) which are adjacent in a horizontal direction (H), by means of which mounting element (10) the side regions (3b) can be connected in a manner in which they support one another.

13. Kit according to claim 12, **characterised in that** the mounting element (10) has a cross-shaped profile (10f) in a horizontal direction (H).

14. Method for assembling an automatic storage system (1), in particular from a kit according to either claim 12 or claim 13, in which at least one wall panel (3) is placed on at least one support member (8) substantially transverse to a longitudinal direction (L) of the support member (8), wherein during the placement at least one mounting segment (8b) of the support member (8) automatically engages in a positive fit in at least one attachment segment (3c) of the wall panel (3), wherein a mounting element (10) is inserted into a crossed slot formed by four meeting wall panels (3) and is subsequently moved in a vertical direction (V).

15. Method according to claim 14, **characterised in that** a protective cover (5) is latched to the mounting element (10).

## Revendications

1. Système de magasin de stockage automatique (1) présentant un volume de magasin de stockage (S), qui est entouré au moins partiellement par un habillage (4) formé d'au moins deux panneaux de paroi (3), les panneaux de paroi (3) étant fixés sur une structure de support, **caractérisé en ce que** les panneaux de paroi sont encliquetés avec la structure de support (8), et **en ce que** des zones latérales (3b) de deux panneaux de paroi (3) voisins forment un logement de réception (9) en forme de fente, dans lequel est engagé un élément de retenue (10).

2. Système de magasin de stockage automatique (1) selon la revendication 1, **caractérisé en ce qu'**au moins un panneau de paroi (3) est pourvu, sur des côtés opposés d'un secteur de paroi extérieure (3a) formant une surface extérieure de paroi (1a) dirigée vers l'extérieur, de deux zones latérales (3b) s'étendant transversalement au secteur de paroi extérieure (3a), qui comportent chacune au moins un secteur de fixation (3c) intégré aux zones latérales (3b) et réalisé, en tant qu'élément d'encliquetage, avec au moins une surface de retenue (3d) dirigée vers l'extérieur.

3. Système de magasin de stockage automatique (1) selon la revendication 1 ou la revendication 2, **caractérisé en ce que** ladite une ou plusieurs surfaces de retenue (3d) d'une zone latérale (3b) s'étendent, dans une direction verticale (V) orientée parallèlement au secteur de paroi extérieure (3a), au total sur au moins un tiers de la hauteur (P) du secteur de paroi extérieure (3a).

4. Système de magasin de stockage automatique (1) selon l'une des revendications 1 à 3, **caractérisé en ce qu'**au moins un panneau de paroi (3) présente des surfaces d'appui (3f), qui sont opposées aux zones latérales (3b) dans une direction s'étendant parallèlement au secteur de paroi extérieure (3a), et qui forment avec les zones latérales (3b) un évidement (6) destiné à recevoir respectivement un montant de support (8).

5. Système de magasin de stockage automatique (1) selon l'une des revendications 1 à 4, **caractérisé en ce que** le secteur de fixation (3c) est formé par une ouverture s'étendant sensiblement de manière parallèle au secteur de paroi extérieure (3a).

6. Système de magasin de stockage automatique (1) selon l'une des revendications 1 à 5, **caractérisé par** un montant de support (8) pour la construction de la structure de support du système de magasin de stockage (1) entourant le volume de magasin de stockage (S), le montant de support comprenant au moins un secteur de retenue (8b) pour la fixation de panneaux de paroi (3), qui est réalisé, en tant qu'élément d'encliquetage, avec au moins une surface de retenue (8c) orientée en direction du volume de magasin de stockage (S).

7. Système de magasin de stockage automatique (1) selon la revendication 6, **caractérisé en ce que** le secteur de retenue (8b) est formé par un prolongement intégré au montant de support (8) et s'étendant de manière à s'éloigner du montant de support (8) parallèlement à la surface de retenue (8c).

8. Système de magasin de stockage automatique (1) selon la revendication 6 ou la revendication 7, **caractérisé en ce que** le montant de support (8) présente une section transversale (8a) sensiblement en forme de C, aux extrémités (8g) mutuellement opposées de laquelle sont agencés les secteurs de retenue (8b) pour la fixation respective d'au moins deux panneaux de paroi (3).

9. Système de magasin de stockage automatique (1) selon l'une des revendications 1 à 8, **caractérisé en ce qu'**il est prévu un cache de protection (5), qui est réalisé de manière à pouvoir être encliqueté avec l'élément de retenue (10), et qui recouvre vis à vis de l'extérieur les zones latérales (3b) de panneaux de paroi (3) voisins.

10. Système de magasin de stockage automatique (1) selon la revendication 9, **caractérisé en ce que** le cache de protection (5) forme au moins une surface extérieure (5h) qui arrive, au moins en partie, au ras d'une surface extérieure de paroi (la) formée par des secteurs de paroi extérieure (3a) des panneaux de paroi (3).

11. Système de magasin de stockage automatique (1) selon la revendication 9 ou la revendication 10, **caractérisé en ce que** le cache de protection (5) comprend au moins un secteur d'appui (5i), qui s'applique au moins en partie contre les zones latérales (3b) de panneaux de paroi (3) mutuellement voisins.

12. Kit de construction modulaire pour des systèmes de magasin de stockage (1), d'après lequel sont prévus au moins un montant de support (8) pour la construction d'une structure de support d'un système de magasin de stockage (1) entourant le volume de magasin de stockage automatique (S), le montant de support (8) comprenant au moins un secteur de retenue (8b) pour la fixation de panneaux de paroi (3), qui est réalisé, en tant qu'élément d'encliquetage, avec au moins une surface de retenue (8c) orientée en direction du volume de magasin de stockage (S), et/ou au moins un panneau de paroi (3) pouvant être encliqueté avec le montant de support (8) et qui est pourvu, sur des côtés opposés d'un secteur de paroi extérieure (3a) formant une surface extérieure de paroi (1a) dirigée vers l'extérieur, de deux zones latérales (3b) s'étendant transversalement au secteur de paroi extérieure (3a), qui comportent chacune au moins un secteur de fixation (3c) intégré aux zones latérales (3b) et réalisé, en tant qu'élément d'encliquetage, avec moins une surface de retenue (3d) dirigée vers l'extérieur, d'après lequel le kit de construction comprend au moins deux panneaux de paroi (3), et d'après lequel il est prévu un élément de retenue (10), qui est conçu pour pouvoir être inséré par complémentarité de formes entre des zones latérales (3b) de deux panneaux de paroi (3) voisins dans une direction horizontale (H), et par l'intermédiaire duquel les zones latérales (3b) peuvent être reliées par appui réciproque.

13. Kit de construction modulaire selon la revendication 13, **caractérisé en ce que** l'élément de retenue (10) présente un profil (10f) en forme de croix dans une direction horizontale (H).

14. Procédé de montage d'un système de magasin de stockage automatique (1), notamment à partir d'un kit de construction modulaire selon l'une des revendications 12 ou 13, d'après lequel on met en place au moins un panneau de paroi (3) sur au moins un montant de support (8), sensiblement de manière transversale à une direction longitudinale (L) du montant de support (8), procédé d'après lequel pendant la mise en place, au moins un secteur de retenue (8b) du montant de support (8) s'engage automatiquement, par complémentarité de formes, dans au moins un secteur de fixation (3c) du panneau de paroi (3), et d'après lequel on insère un élément de retenue (10) dans une fente en croix formée par quatre panneaux de paroi (3) se rencontrant mutuellement, et on le fait ensuite coulisser dans une direction verticale (V).

15. Procédé selon la revendication 14, **caractérisé en ce que** l'on enclenche un cache de protection (5) sur l'élément de retenue (10).
